# EUROPEAN PATENT APPLICATION

(11) **EP 4 332 744 A1**
(43) Date of publication of application: **06.03.2024**
(21) Application number: 22814835.9
(22) Date of filing: 30.03.2022
(51) Int. Cl.: G06F 3/0488, G06F 3/0481

(54) **CONTROL METHOD AND ELECTRONIC DEVICE**

(30) Priority: 01.06.2021 CN 202110611045
(71) Applicant: Huawei Technologies Co., Ltd., Longgang Shenzhen, Guangdong 518129 (CN)
(72) Inventor: DING, Chenpeng, Shenzhen, Guangdong 518129 (CN); LI, Xu, Shenzhen, Guangdong 518129 (CN)
(74) Representative: Isarpatent
(86) International application number: PCT/CN2022/084089
(87) International publication number: WO 2022/252788

(57) **Abstract**

Embodiments of this application provide a control method and an electronic device. The method may include: displaying a first interface on a touchscreen of an electronic device; in response to that the touchscreen receives a first operation, switching the first interface to a second interface; after a touch body completes the first operation and leaves the touchscreen, in response to that the touchscreen receives a second operation, switching the second interface to a third interface; and after the touch body completes the second operation and leaves the touchscreen, in response to that the touchscreen receives a third operation, switching the third interface to the first interface. Both the second interface and the third interface include a display interface of a notification center or a display interface of a control center, and the second interface is different from the third interface. In this way, a user may perform switching between the notification center and the control center on the electronic device, and may directly return to an initial interface (for example, a home screen or a display interface of an application) of the electronic device from a switched interface. This improves convenience for user operations and user experience.

## Description

This application claims priority to Chinese Patent Application No. 202110611045.2, filed with the China National Intellectual Property Administration on June 1, 2021 and entitled "CONTROL METHOD AND ELECTRONIC DEVICE", which is incorporated herein by reference in its entirety.

### TECHNICAL FIELD

This application relates to the field of terminal technologies, and in particular to a control method and an electronic device.

### BACKGROUND

As a size of a screen of an electronic device, for example, a smartphone or a tablet computer gradually increases, a notification center and a control center are usually disposed on the electronic device to facilitate a user to control the electronic device. The notification center may be an entrance for managing pushing of an application (application, APP) in the electronic device or displaying resident status information. The control center may be an entrance for controlling a status of a device.

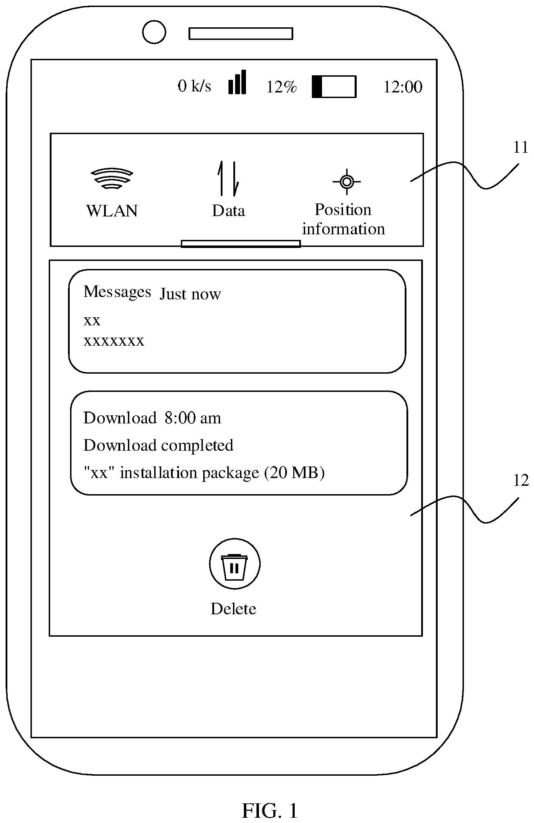

Currently, the notification center and the control center on the electronic device may be simultaneously displayed in one window. For example, as shown in FIG. 1, a control center 11 and a notification center 12 may be simultaneously brought up by sliding downward from a top of a screen of the electronic device. The control center 11 is on an upper side, and the notification center 12 is on a lower side. The control center 11 may display a most commonly used shortcut switch in a foldable manner by default and support unfolding to view more information. The notification center 12 may support up-and-down scrolling browse like a list. However, as more devices can be controlled by the electronic device, if control of a plurality of devices is simultaneously added to the control center of the electronic device, a display interface of the electronic device is excessively crowded when the notification center and the control center are displayed on the electronic device. In this case, the control center on the electronic device is not appropriate for carrying too much information at a time. Therefore, how to facilitate the user to operate the notification center and the control center on the electronic device is a technical problem to be urgently resolved currently.

### SUMMARY

This application provides a control method and an electronic device, so that a user can conveniently operate a notification center and a control center on the electronic device.

According to a first aspect, this application provides a control method. The control method is applied to an electronic device having a touchscreen, and may include: displaying a first interface on the touchscreen; in response to that the touchscreen receives a first operation, switching the first interface to a second interface, where the first operation is an operation of sliding on the touchscreen in a first direction when a start position at which a touch body touches the touchscreen is located in a first area of the touchscreen; after the touch body completes the first operation and leaves the touchscreen, in response to that the touchscreen receives a second operation, switching the second interface to a third interface, where the second operation is an operation of sliding on the touchscreen in a second direction when a start position at which the touch body re-touches the touchscreen is located in a second area of the touchscreen; and after the touch body completes the second operation and leaves the touchscreen, in response to that the touchscreen receives a third operation, switching the third interface to the first interface, where the third operation is an operation of sliding on the touchscreen in a third direction when a start position at which the touch body re-touches the touchscreen is located in a third area of the touchscreen, the second interface is a display interface of a notification center, and the third interface is a display interface of a control center; or the second interface is a display interface of a control center, and the third interface is a display interface of a notification center. In this way, a user may perform switching between the notification center and the control center on the electronic device, and may directly return to an initial interface (for example, a home screen or a display interface of an application) of the electronic device from a switched interface. This improves convenience for user operations and user experience.

According to a second aspect, this application provides a control method. The control method is applied to an electronic device having a touchscreen, and may include: displaying a first interface on the touchscreen; in response to that the touchscreen receives a first operation, switching the first interface to a second interface, where the first operation is an operation of sliding on the touchscreen in a first direction when a start position at which a touch body touches the touchscreen is located in a first area of the touchscreen; after the touch body completes the first operation and leaves the touchscreen, in response to that the touchscreen receives a second operation, switching the second interface to a third interface, where the second operation is an operation of sliding on the touchscreen in a second direction when a start position at which the touch body re-touches the touchscreen is located in a second area of the touchscreen; and after the touch body completes the second operation and leaves the touchscreen, in response to that the touchscreen receives the first operation again, switching the third interface to the second interface, where the second interface is a display interface of the notification center, and the third interface is a display interface of the control center; or the second interface is a display interface of the control center, and the third interface is a display interface of the notification center. In this way, a user may perform alternate switching between the notification center and the control center on the electronic device. This improves convenience for user operations and user experience.

In a possible implementation of the second aspect, after the switching the third interface to the second interface, the method further include: after the touch body completes the first operation and leaves the touchscreen, in response to that the touchscreen receives a third operation, switching the second interface to the first interface, where the third operation is an operation of sliding on the touchscreen in a third direction when a start position at which the touch body re-touches the touchscreen is located in a third area of the touchscreen. In this way, the user may directly return to an initial interface (for example, a home screen or a display interface of an application) on the electronic device from a switched interface on the electronic device. This improves the convenience for the user operations and user experience.

In a possible implementation of the first aspect or the second aspect, the first interface includes a display interface of a home screen on the electronic device, or the first interface includes a display interface of an application on the electronic device.

In a possible implementation of the first aspect or the second aspect, both the second interface and the third interface are displayed in a first window. In this way, when switching is performed between the two interfaces, content in one interface may be replaced with content in the other interface. Therefore, one window is opened when the other window is not to be closed. This improves switching efficiency.

In a possible implementation of the first aspect or the second aspect, the first window is a status bar window.

In a possible implementation of the first aspect or the second aspect, the first interface and the second interface are displayed in different windows. For example, when the first interface is the display interface of an application, the first interface may be displayed in a display window of the application, and the second interface may be displayed in a status bar window.

In a possible implementation of the first aspect or the second aspect, the first area is located on a first side at a top of the touchscreen, and the first direction is a direction from the top of the touchscreen to a bottom of the touchscreen; the second area is located on a second side at the top of the touchscreen, and the second direction is the same as the first direction; and the third area is an area other than the first area and the second area on the touchscreen, and the third direction is opposite to the first direction.

In a possible implementation of the first aspect or the second aspect, the notification center is an entrance that is on the electronic device and that is used to manage pushing of an application on the electronic device or display resident status information, and the control center is an entrance that is on the electronic device and that is used to control a status of the electronic device.

In a possible implementation of the first aspect or the second aspect, before the switching a first target interface to a second target interface, the method further includes: determining that an operation of the touch body on the touchscreen meets a trigger condition, where the trigger condition is a condition for triggering interface switching. The first target interface is the first interface, and the second target interface is the second interface; the first target interface is the second interface, and the second target interface is the third interface; the first target interface is the third interface, and the second target interface is the first interface; the first target interface is the third interface, and the second target interface is the second interface; or the first target interface is the second interface, and the second target interface is the first interface. In this way, interface switching is performed when the trigger condition is met, to improve switching effect.

In a possible implementation of the first aspect or the second aspect, the condition for triggering interface switching may specifically include: A distance between a position at which the touch body touches the touchscreen at a current moment and the start position is greater than or equal to a preset distance threshold.

In a possible implementation of the first aspect or the second aspect, the condition for triggering interface switching may specifically include: A position at which the touch body touches the touchscreen at a current moment reaches a preset position on the touchscreen.

In a possible implementation of the first aspect or the second aspect, the condition for triggering interface switching may specifically include: a distance between a position at which the touch body leaves the touchscreen and the start position is less than a preset distance threshold, and a speed at which the touch body leaves the touchscreen is greater than or equal to a preset speed threshold.

In a possible implementation of the first aspect or the second aspect, in a process in which the first target interface is switched to the second target interface, the method may further include: increasing transparency of the first target interface, or reducing definition of the first target interface. In this way, transition processing may be performed in the process of switching between the two interfaces, to enhance the switching effect.

In a possible implementation of the first aspect or the second aspect, the switching the first interface to a second interface may include: covering the first interface with the second interface; the switching the first interface to a second interface includes: performing blur processing on the first interface, and covering, with the second interface, the first interface that is obtained by blur processing; the switching the second interface to a third interface includes: closing the second interface, and opening the third interface; the switching the second interface to a third interface includes: closing the second interface, and opening the third interface, where the third interface covers the first interface; the switching the third interface to the first interface includes: closing the third interface that covers the first interface, and presenting the first interface; the switching the third interface to the second interface includes: closing the third interface, and opening the second interface; the switching the third interface to the second interface includes: closing the third interface, and opening the second interface, where the second interface covers the first interface; or the switching the second interface to the first interface includes: closing the second interface that covers the first interface, and presenting the first interface.

According to a third aspect, this application provides a control method. The control method is applied to an electronic device having a touchscreen, and may include: displaying a first interface on the touchscreen, where the first interface includes a display interface of a home screen on the electronic device, or the first interface includes a display interface of an application on the electronic device; in response to that the touchscreen receives a first operation, covering the first interface with a second interface, where the first operation is an operation of sliding toward a bottom of the touchscreen when a start position at which a touch body touches the touchscreen is located in a first area at a top of the touchscreen, and the second interface includes a display interface of a notification center or a display interface of a control center; after the touch body completes the first operation and leaves the touchscreen, in response to that the touchscreen receives a second operation, closing the second interface and opening a third interface, where the opened third interface covers the first interface, the second operation is an operation of sliding toward the bottom of the touchscreen when a start position at which the touch body re-touches the touchscreen is located in a second area at the top of the touchscreen, the third interface includes a display interface of the notification center or a display interface of the control center, and the third interface is different from the second interface; and after the touch body completes the second operation and leaves the touchscreen, in response to that the touchscreen receives a third operation, closing the third interface, and presenting the first interface, where the third operation is an operation of sliding toward the top of the touchscreen when a start position at which the touch body re-touches the touchscreen is located in a third area other than the top of the touchscreen.

In a possible implementation of the third aspect, before the covering the first interface with a second interface, the method may further include: reducing definition of the first interface.

In a possible implementation of the third aspect, before the closing the second interface, the method may further include: increasing transparency of the second interface.

According to a fourth aspect, this application provides an electronic device. The electronic device may include a touchscreen, one or more processors, and a memory. One or more computer programs are stored in the memory, and the one or more computer programs include instructions. When the instructions are executed by the electronic device, the electronic device is enabled to perform the method provided in the first aspect, the second aspect, or the third aspect.

According to a fifth aspect, this application provides a computer-readable storage medium. The computer-readable storage medium stores a computer program. When the computer program is run on an electronic device, the electronic device is enabled to perform the method provided in the first aspect, the second aspect, or the third aspect.

According to a sixth aspect, this application provides a computer program product. When the computer program product is run on an electronic device, the electronic device is enabled to perform the method provided in the first aspect, the second aspect, or the third aspect.

### BRIEF DESCRIPTION OF DRAWINGS

FIG. 1 is a schematic diagram of a display interface of a mobile phone in a related technology;
FIG. 2 is a schematic diagram of a hardware structure of an electronic device according to an embodiment of this application;
FIG. 3 is a schematic diagram of coordinate axes on a screen of an electronic device according to an embodiment of this application;
FIG. 4 is a schematic diagram of an architecture of an operating system in an electronic device according to an embodiment of this application;
FIG. 5 is a schematic diagram of an application scenario of an operation method for a mobile phone according to an embodiment of this application;
FIG. 6 is a schematic diagram of a point at which a finger of a user touches a screen, a trigger threshold point, and a point at which the finger of the user leaves the screen when the finger of the user slides on a mobile phone according to an embodiment of this application;
FIG. 7 is a schematic diagram of areas in which a point at which a finger of a user touches a screen and a trigger threshold point are located when the finger of the user slides on a mobile phone according to an embodiment of this application;
FIG. 8(a) to FIG. 8(f) are a schematic diagram of a process in which a home screen is switched to a notification center on a mobile phone according to an embodiment of this application;
FIG. 9(a) to FIG. 9(f) are a schematic diagram of a process in which a home screen is switched to a control center on a mobile phone according to an embodiment of this application;
FIG. 10(a) to FIG. 10(f) are a schematic diagram of a process in which a notification center is switched to a control center on a mobile phone according to an embodiment of this application;
FIG. 11(a) to FIG. 11(f) are a schematic diagram of a process in which a control center is switched to a notification center on a mobile phone according to an embodiment of this application;
FIG. 12(a) to FIG. 12(f) are a schematic diagram of a process in which a home screen is switched to a notification center, the notification center is switched to a control center, and the control center is returned to the home screen on a mobile phone according to an embodiment of this application;
FIG. 13(a) to FIG. 13(f) are a schematic diagram of a process in which a home screen is switched to a control center, the control center is switched to a notification center, and the notification center is returned to the home screen on a mobile phone according to an embodiment of this application;
FIG. 14 is a schematic diagram of a system architecture of a mobile phone according to an embodiment of this application;
FIG. 15A and FIG. 15B are a schematic flowchart of a process in which a notification center and/or a control center is brought up according to an embodiment of this application; and
FIG. 16 is a schematic diagram of a structure of a chip according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word "example" or "for example" is used to represent an example, an illustration, or a description. Any embodiment or design solution described as an "example" or "for example" in embodiments of this application should not be explained as being more preferred or having more advantages than another embodiment or design solution. Exactly, the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

To facilitate user operations, a notification center and a control center on an electronic device may be separately controlled. In this case, the notification center and the control center may be displayed in different windows. For example, the notification center may be brought up by sliding downward from a top left side of a screen of the electronic device, and the control center may be brought up by sliding downward from a top right side of the screen of the electronic device. Alternatively, the notification center may be brought up by sliding downward from a top of a screen of the electronic device, and the control center may be brought up by sliding upward from a bottom of the screen of the electronic device. In this manner, although a user may select, based on a requirement of the user, bringing up the notification center or the control center, priorities of different windows in a system software architecture of the electronic device are different, and a priority of a display window of the notification center is usually lower than a priority of a display window of the control center. This enables, when the notification center is being displayed on the electronic device, the display window of the control center may be brought up. In this case, the control center covers the notification center. When an interface displayed before the notification center is brought up is to be returned, the display window of the control center is to be closed first, and then the display window of the notification center is closed. It may be learned that a return operation is not easily performed. In addition, when the control center is being displayed on the electronic device, the display window of the notification center may not be brought up due to the priority of the display window. It may be learned that, in this solution in which the notification center and the control center are separately disposed, the user operations are not easily performed, and user experience is relatively poor.

Further, to facilitate the user operations and improve user experience, in this embodiment of this application, the notification center and the control center on the electronic device are designed in equal priorities, to enable the notification center and the control center to be repeatedly and alternately switched based on a user requirement. This improves convenience for the user operations and user experience. In addition, when one of the notification center and the control center is in a display state, and the electronic device detects an operation of bringing up the other of the notification center and the control center, the electronic device may close the one that is being displayed, and may display the other one that is currently brought up by the user, to avoid overlapping and nesting between the notification center and the control center. This enables the user to quickly return to an interface displayed before the notification center or the control center is brought up. For example, when the control center is currently being displayed on the electronic device, and the electronic device detects an operation of bringing up the notification center, the electronic device may close the control center and may display the notification center. When the notification center is currently displayed on the electronic device, and the electronic device detects an operation of bringing up the control center, the electronic device may close the notification center and display the control center.

It may be understood that, in this solution, the electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, a smart city device, and/or the like. An example embodiment of the electronic device includes but is not limited to an electronic device that carries an iOS, an Android, a Windows, a Harmony OS (Harmony OS), or another operating system. A specific type of the electronic device is not specifically limited in this solution.

The following describes a schematic diagram of a hardware structure of an electronic device according to this solution.

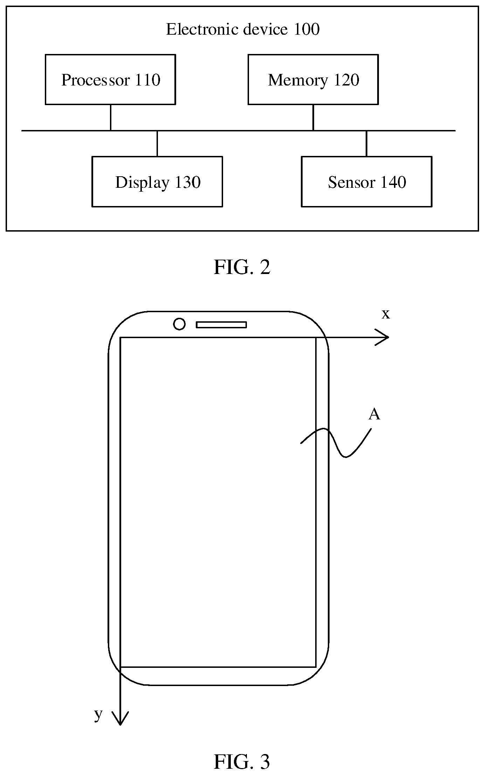

FIG. 2 is a schematic diagram of a hardware structure of an electronic device according to an embodiment of this application. As shown in FIG. 2, the electronic device 100 may include a processor 110, a memory 120, a display 130, and a sensor 140. It may be understood that the structure illustrated in this embodiment of this solution does not constitute a specific limitation on the electronic device 100. In some other embodiments of this solution, the electronic device 100 may include more or fewer components than those shown in the figure, combine some components, split some components, or have a different component arrangement. The components shown in the figure may be implemented by hardware, software, or a combination of software and hardware.

The processor 110 may be a general-purpose processor, a dedicated processor, or the like. For example, the processor 110 may include a central processing unit (central processing unit, CPU) and/or a baseband processor. The baseband processor may be configured to process communication data, and the CPU may be configured to implement corresponding control and processing functions, execute a software program, and process data of the software program.

The memory 120 may store a program (or may be instructions or code), and the program may be run by the processor 110, to enable the processor 110 to perform the method described in this solution. The memory 120 may store instructions or data that has been recently used or cyclically used by the processor 110. If the processor 110 needs to use the instructions or data again, the processor 110 may directly invoke the instructions or data from the memory 120. This avoids repeated access, reduces waiting time of the processor 110, and improves efficiency of a system.

The display 130 is configured to display an image, a video, and the like. The display 130 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 130, where N is a positive integer greater than 1.

The sensor 140 may include a pressure sensor, a gyroscope sensor, a barometric pressure sensor, a magnetic sensor, an acceleration sensor, a range sensor, an optical proximity sensor, a fingerprint sensor, a temperature sensor, an ambient light sensor, a bone conduction sensor, or the like.

In this solution, the sensor 140 may alternatively include a touch sensor. The touch sensor may be configured to detect a touch operation on or near the touch sensor. The touch sensor may collect a touch event (for example, an operation performed by a user on a surface of the touch sensor by using any suitable object such as a finger or a stylus) of the user on or near the touch sensor, and send collected touch information to another device, for example, the processor 110.

For example, the touch sensor may be implemented in a plurality of types, such as a resistive type, a capacitive type, an infrared type, and a surface acoustic wave type. The touch sensor may be disposed on the display 130, and the touch sensor and the display 130 form a touchscreen, which is also referred to as a "touch screen". Alternatively, the touch sensor and the display 130 may be used as two independent components to implement input and output functions of the electronic device 100.

In some embodiments of this solution, a rectangular coordinate system may be preset in a touchscreen including the touch sensor. For example, as shown in FIG. 3, the rectangular coordinate system may be established by using an upper left corner of a touchscreen A as an origin (0, 0). Alternatively, the rectangular coordinate system may be established by using a geometric center of a touchscreen A as an origin (0, 0) (not shown in the figure). When a touch body slides on the touchscreen, the touch sensor in the touchscreen may continuously collect a series of touch events (for example, coordinates of a touch point and a touch event) generated by the touch body on the touchscreen, and may report the series of touch events to the processor 110. The touch body may be an object, for example, a touch pen, a finger, or a joint of a user, or a touch glove having a touch function. This is not limited in this solution. In subsequent embodiments, an example in which the finger of the user is the touch body is used for description.

It may be understood that a software system of the electronic device 100 may use a layered architecture, an event-driven architecture, a microkernel architecture, a microservice architecture, or a cloud architecture. In this solution, an Android system with a layered architecture is used as an example to illustrate a software structure of the electronic device 100.

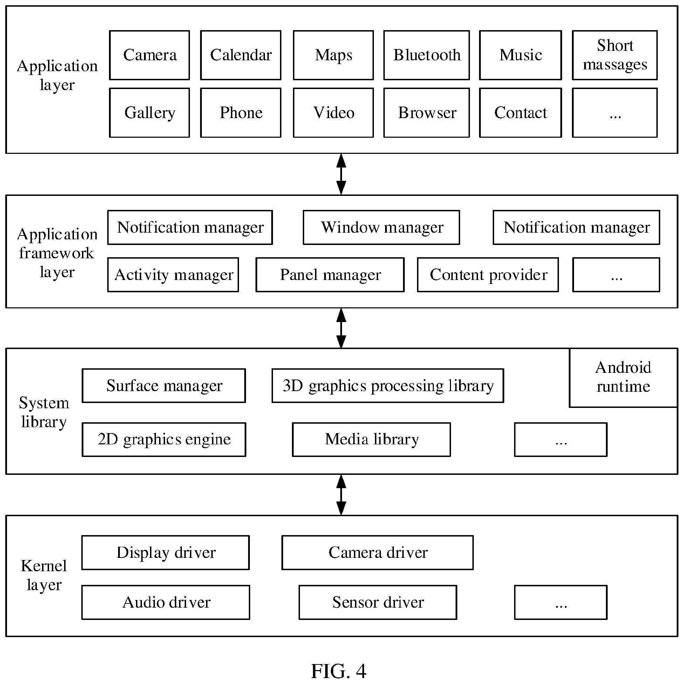

FIG. 4 is a block diagram of a software structure of an electronic device 100 according to an embodiment of this application.

In a layered architecture, software is divided into a plurality of layers, and each layer has a clear role and task. The layers communicate with each other through a software interface. In some embodiments, an Android system is divided into four layers: an application layer, an application framework layer, an Android runtime (Android runtime), and a system library, and a kernel layer from top to bottom. For a mobile terminal operating system self-developed by Huawei, refer to this structure.

### 1. Application layer

The application layer may include a series of application packages. As shown in FIG. 4, the application package may include applications (application, APP) such as Camera, Gallery, Calendar, Phone, Maps, Navigation, Bluetooth, Music, Video, and Short messages.

### 2. Application framework layer

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by the application. The data may include a video, an image, audio, a call that is made and received, a browsing history and browsing bookmark, an address book, and the like.

The view system may be configured to construct a display interface of the application. Each display interface may include one or more controls. Generally, the control may include an interface element, for example, an icon, a button, a menu, a tab, a text box, a dialog box, a status bar, a navigation bar, a widget (widget), or the like.

The phone manager is configured to provide a communication function for the electronic device 100, for example, management of a call status (including answering, hanging up, or the like).

The resource manager provides various resources such as a localized character string, an icon, an image, a layout file, and a video file for an application.

The notification manager enables the application to display notification information in a notification center, and may be configured to convey a notification message. The notification manager may automatically disappear after a short pause without user interaction. For example, the notification manager is configured to notify download completion, provide a message notification, or the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in a notification center, a prompt tone is played, the electronic device vibrates, or an indicator light blinks.

An activity manager is configured to manage a life cycle of each application. The application usually runs in an operating system in a form of an activity. The activity manager may schedule an activity process of the application to manage the life cycle of each application.

### 3. Android runtime and system library

The Android runtime includes a kernel library and a virtual machine. The Android runtime is responsible for scheduling and management of the Android system.

The kernel library includes two parts: a function that is to be brought up in Java language and a kernel library of the Android system.

The application layer and the application framework layer are run on the virtual machine. The virtual machine executes Java files at the application layer and the application framework layer as binary files. The virtual machine is configured to enable functions such as object life cycle management, stack management, thread management, security and exception management, and garbage collection.

The system library may include a plurality of function modules, for example, a surface manager (surface manager), a media library (media Library), a three-dimensional graphics processing library (for example, OpenGL ES), and a 2D graphics engine (for example, SGL).

The surface manager is configured to manage a display subsystem and provide fusion of 2D and 3D layers for a plurality of applications. The media library supports playback and recording in a plurality of commonly used audio and video formats, static image files, and the like. The media library may support a plurality of audio and video coding formats such as MPEG4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### 4. Kernel layer

The kernel layer is a layer between hardware and software. The kernel layer includes at least a display driver, a camera driver, an audio driver, and a sensor driver.

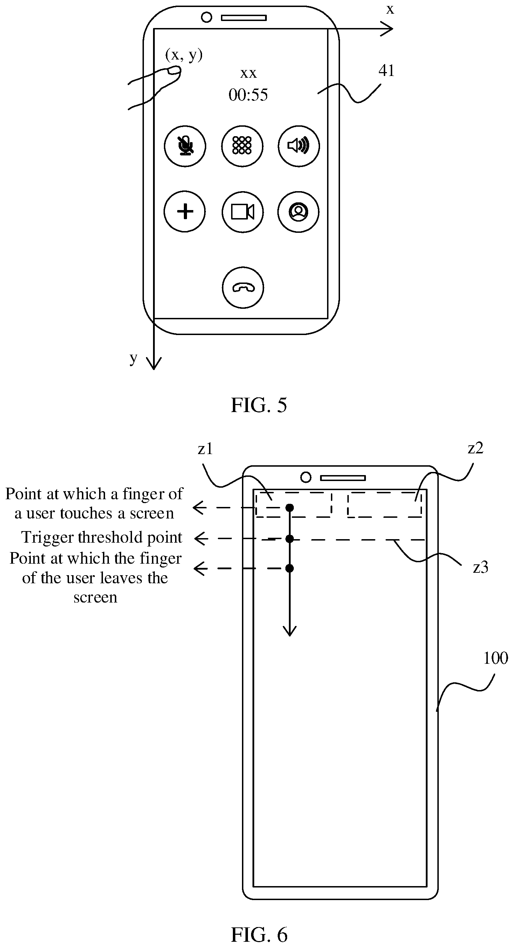

In some embodiments of this solution, a finger of a user may touch a touchscreen, and slide on the touchscreen. For example, the finger of the user may touch and slide on a top left side of the touchscreen, may touch and slide on a top right side of the touchscreen, or may touch and slide on a bottom left side or a bottom right side of the touchscreen. For example, an example in which the finger of the user touches the top left side of the touchscreen is used. As shown in FIG. 5, a display interface 41 of a call is running at the application layer. When the finger of the user slides downward from the top left side of the touchscreen, the touchscreen may obtain information about a series of touch points related to the touch operation, for example, coordinates (x, y) of the touch points, a touch event, and the like. Further, the touchscreen may report, to the kernel layer, an original touch event generated by the touch operation of the user. After obtaining the original touch event, the kernel layer may encapsulate the touch event into an advanced touch event that can be read by the application framework layer (that is, a framework layer), that is, a touch event. The touch event includes the coordinates of the touch point, time, and a type of the current touch event, for example, an action down event, an action move event, and an action up event. Then, the kernel layer may send the advanced touch event to a panel manager at the application framework layer.

After obtaining the advanced touch event, the panel manager may calculate in real time, based on the coordinates of the touch point, the time, and the type of the touch event in the advanced touch event, a start point of sliding, a sliding track, a sliding distance, or a sliding speed of the finger of the user, or a sliding speed at a point at which a finger of a user leaves a screen. For example, when the panel manager detects the action down event, it indicates that the finger of the user touches the touchscreen. When the panel manager detects the action up event, it indicates that the finger of the user leaves the touchscreen. In this case, the panel manager may recognize a sliding track and a sliding distance of the finger of the user on the touchscreen based on coordinates of a touch point between the action down event and the action up event that are adjacent, and/or may recognize, based on the coordinates of a touch point between the action down event and the action up event that are adjacent, and the time, the sliding track of the finger of the user on the touchscreen and the sliding speed at the point at which a finger of a user leaves a screen.

The following uses an example in which the electronic device 100 is a mobile phone and a notification center and a control center on the mobile phone are brought up to describe in detail a control process in embodiments of this application based on the foregoing described content and with reference to the accompanying drawings. It may be understood that the notification center and the control center may alternatively be replaced with other content. This is not limited herein.

In embodiments of this application, when the user calls the notification center or the control center on the mobile phone, and the finger is on the mobile phone, an operation of the user may include: The finger of the user touches a screen of the mobile phone, the finger of the user slides on the screen of the mobile phone, the finger of the user leaves the screen of the mobile phone, and the like. A position at which the finger of the user touches the screen of the mobile phone may be referred to as a point at which a finger of a user touches a screen. A position at which the notification center or the control center is triggered to be brought up in a process in which the finger of the user slides may be referred to as a trigger threshold point. A position at which the finger of the user leaves the screen of the mobile phone may be referred to as a point at which a finger of a user leaves a screen. When the notification center or the control center is brought up, the notification center or the control center may be located at an initial position. If the finger of the user does not leave the screen of the mobile phone and continues to slide after the notification center or the control center is brought up, the notification center or the control center may move in a sliding direction of the finger. After the finger leaves the screen, the notification center or the control center may return to the initial position. For example, after the finger slides downward to bring up the notification center, if the finger does not leave the screen and continues to slide downward, the notification center also slides downward along with the finger. After the finger leaves the screen, the notification center bounces upward to a balance point (that is, returns to an initial position when the notification center just appears).

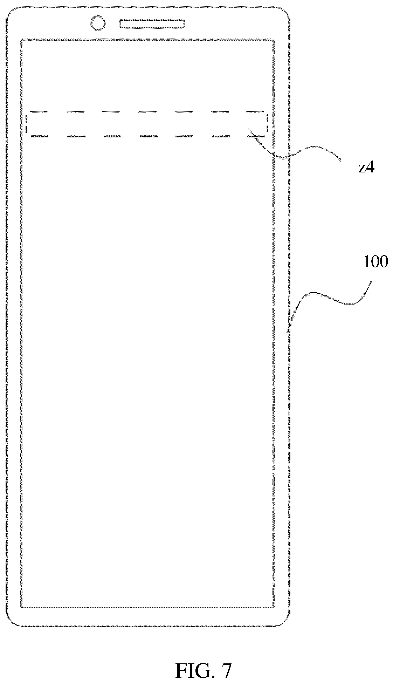

In an example, the point at which a finger of a user touches a screen may be a point located in a preset area on the mobile phone. The trigger threshold point may be a point at a preset distance from the point at which a finger of a user touches a screen, may be a point located in the preset area, or may be a combination of the point at a preset distance from the point at which a finger touches a screen and the point located in the preset area (in this case, when one of the two points is met, the notification center or the control center is triggered). For example, as shown in FIG. 6, the point at which a finger of a user touches a screen may be in an area z1 and/or an area z2 on the mobile phone 100. When the finger of the user touches the area z1 on the mobile phone 100, the point at which a finger of a user touches a screen is located in the area z 1, the trigger threshold point is a point in an area z3, and the point at which a finger of a user leaves a screen may be a point between the area z3 and a bottom of the screen of the mobile phone 100. The area z3 may be a line. For example, in addition to a line, an area in which the trigger threshold point is located may be a surface. As shown in FIG. 7, an area z4 on the mobile phone 100 may be an area in which the trigger threshold point is located. In this case, the area z4 is a surface.

In an example, if the finger of the user does not slide to the specified trigger threshold point when the finger of the user leaves the screen of the mobile phone, the notification center or the control center may be triggered to be brought up when the speed at the point at which a finger of a user leaves a screen is greater than a preset speed threshold, or the sliding speed of the finger of the user is greater than a preset speed threshold. For example, both the speed at the point at which a finger of a user leaves a screen and/or the sliding speed of the finger of the user may be calculated by using a velocity tracker (velocity tracker).

Next, bringing up the notification center, bringing up the control center, and switching between the notification center and the control center are described separately. For ease of description, in the following, a process in which the notification center is brought up is described by using an example in which the point at which a finger of a user touches a screen is located in the area z1 on the mobile phone 100 in FIG. 7 and the finger of the user slides over the trigger threshold point, and the notification center is brought up when the finger of the user leaves the screen of the mobile phone, and a process in which the control center is brought up is described by using an example in which the point at which a finger of a user touches a screen is located in the area z2 and the finger of the user slides over the trigger threshold point, and the control center is brought up when the finger of the user leaves the screen of the mobile phone.

### (1) Bringing up the notification center (the control center is not brought up in this case)

For example, when the control center is not brought up on the mobile phone 100, and the notification center is to be brought up currently, the screen of the mobile phone 100 may be in a screen-on state. For example, a standby interface or a display interface of a home screen may be displayed on the screen of the mobile phone 100. Alternatively, a display interface of an application in the mobile phone may be displayed on the screen of the mobile phone 100.

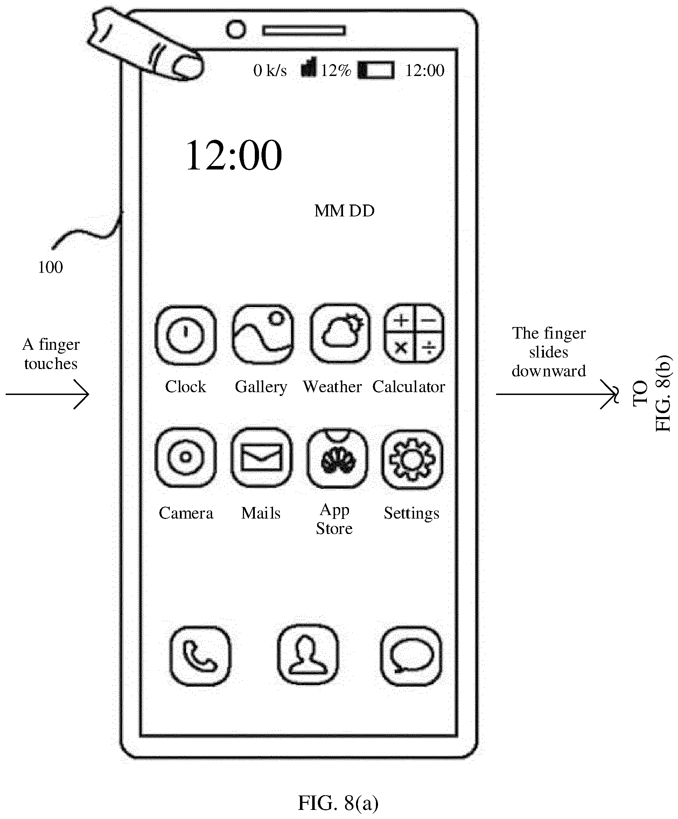

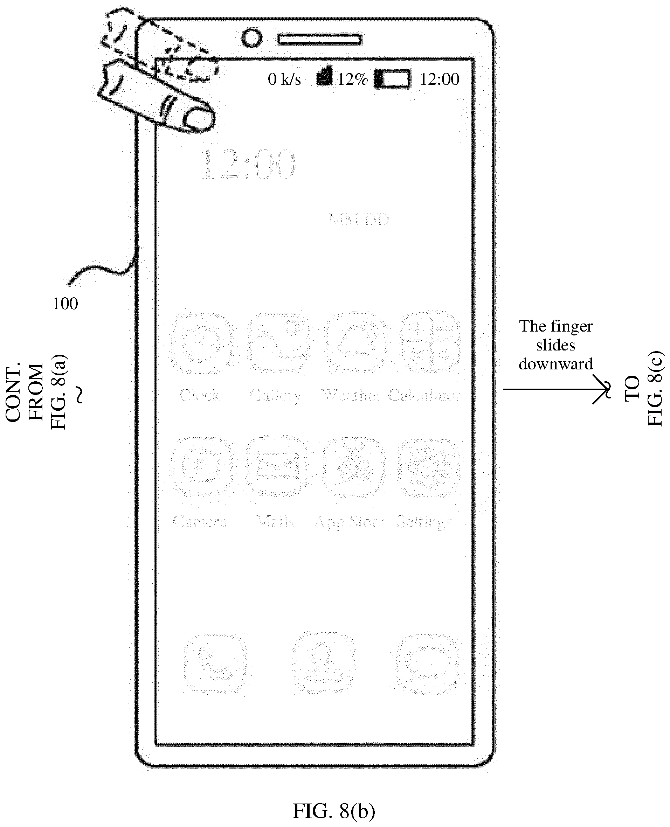

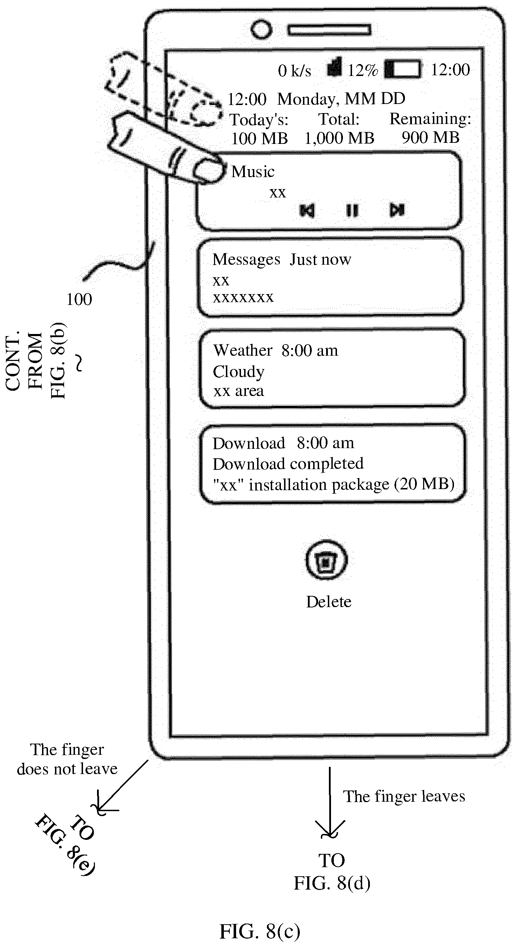

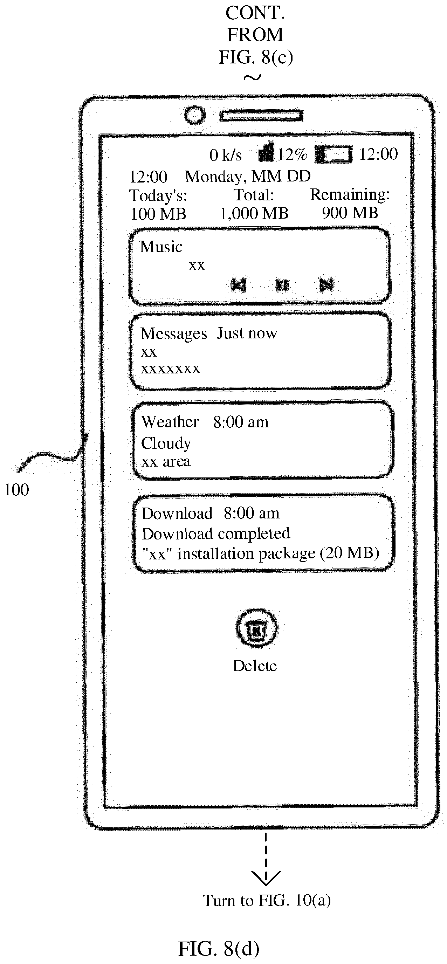

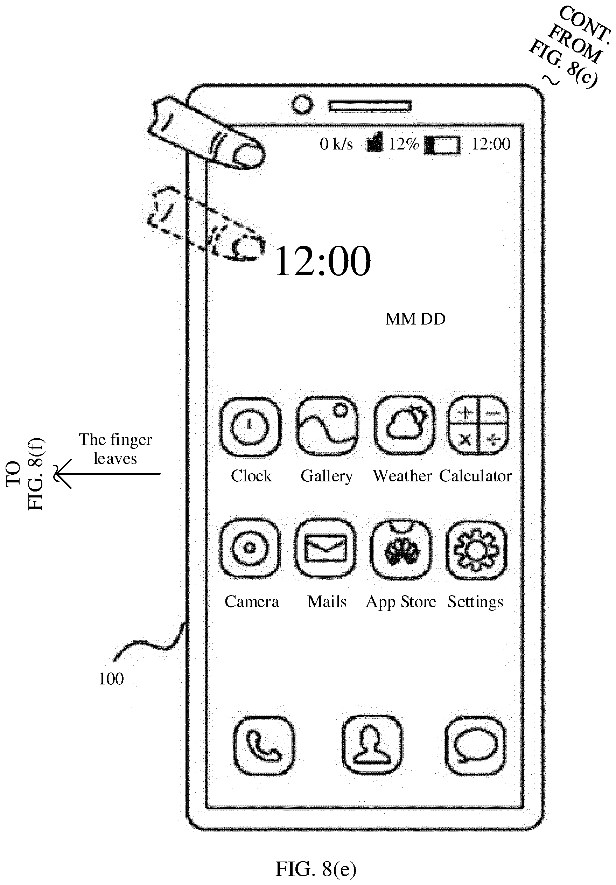

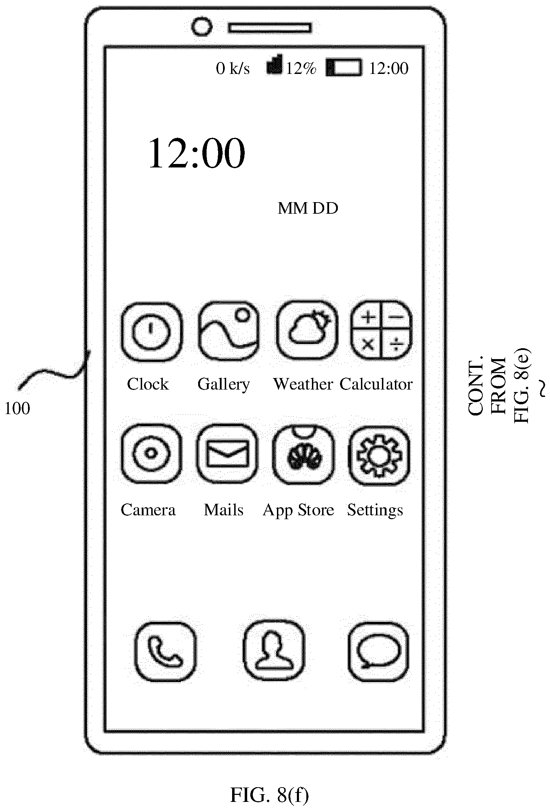

For example, the display interface of the home screen is displayed on the screen of the mobile phone 100. As shown in FIG. 8(a), the finger of the user may touch a top left side of the screen of the mobile phone 100. Then, when the finger of the user slides downward, and does not reach the trigger threshold point, the display interface of the home screen may be gradually blurred along with the sliding of the finger of the user, as shown in FIG. 8(b). In this process, as the finger of the user is closer to the point at which a finger of a user touches a screen, a degree of blurring is smaller. As the finger of the user is closer to the trigger threshold point, the degree of blurring is larger. That is, when the finger of the user slides, the display interface of the home screen gradually becomes blurred from clear until completely becoming blurred. The completely blurred means that specific content displayed on the display interface is invisible. When the display interface of the home screen is completely blurred, the finger of the user may slide to the trigger threshold point. When the finger of the user slides to the trigger threshold point, the notification center may be displayed, as shown in FIG. 8(c). After the notification center is displayed on the screen of the mobile phone 100, if the finger of the user leaves the screen of the mobile phone 100, an interface shown in FIG. 8(d) may be displayed on the mobile phone 100. After the notification center is displayed on the screen of the mobile phone 100, if the finger of the user slides in a reverse direction instead of leaving the screen of the mobile phone 100, the mobile phone 100 may return to an interface displayed before the notification center is displayed, that is, an interface shown in FIG. 8(e). Still refer to FIG. 8(e). After the finger of the user slides upward, the finger of the user may leave the screen of the mobile phone 100. In this case, an interface shown in FIG. 8(f) may be displayed, that is, an interface displayed after the home screen of the mobile phone 100 is returned.

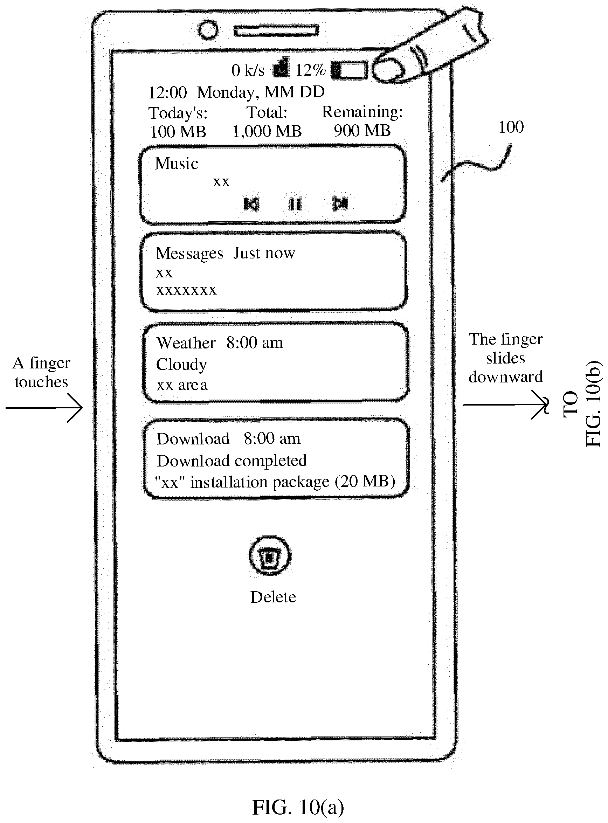

Optionally, after the interface shown in FIG. 8(d) is displayed on the mobile phone 100, refer to FIG. 10(a), to switch the notification center to the control center.

### (2) Bringing up the control center (the notification center is not brought up in this case)

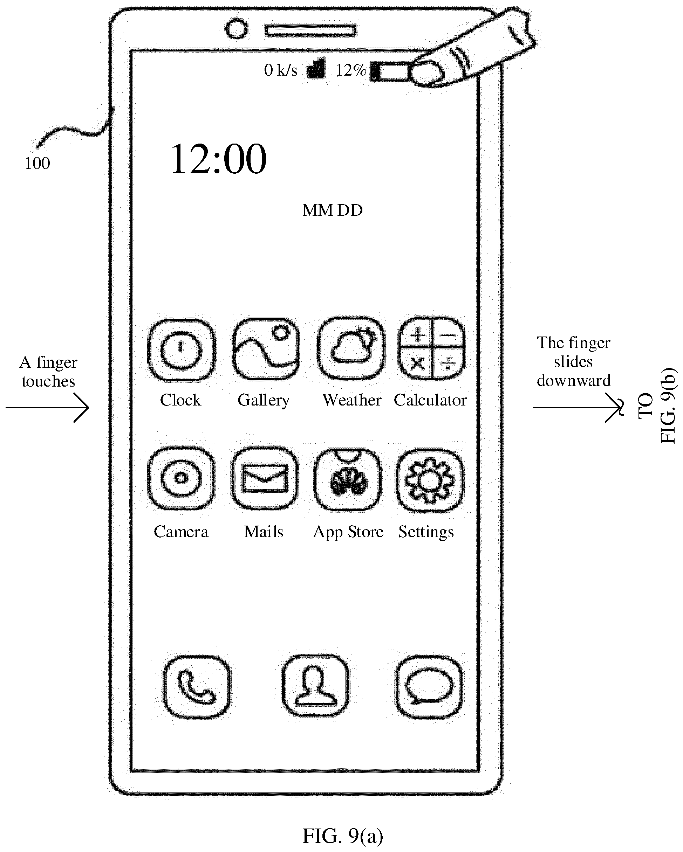

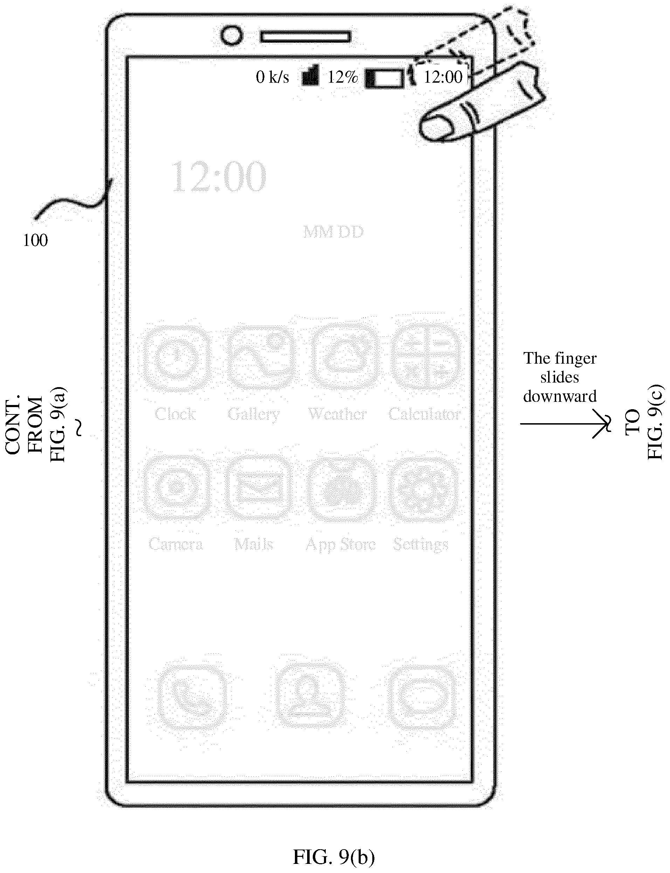

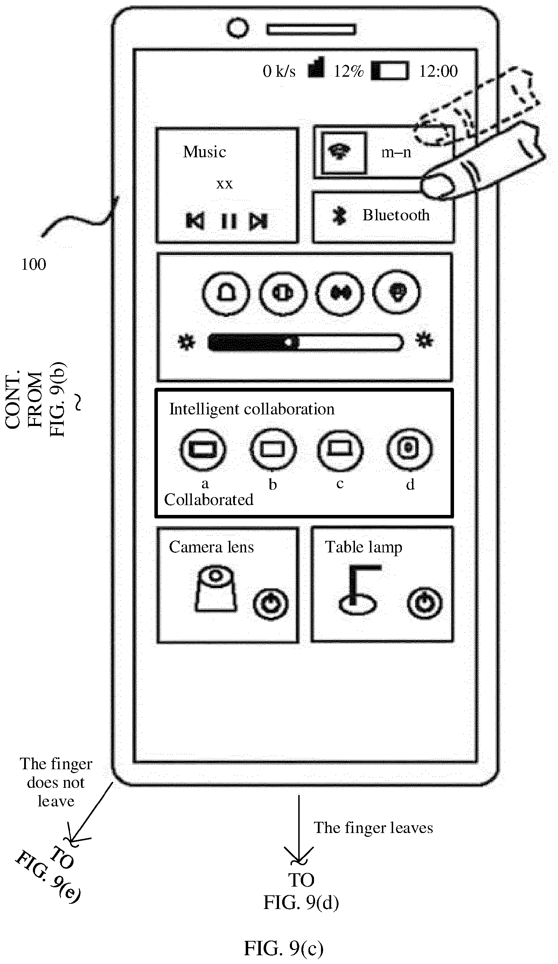

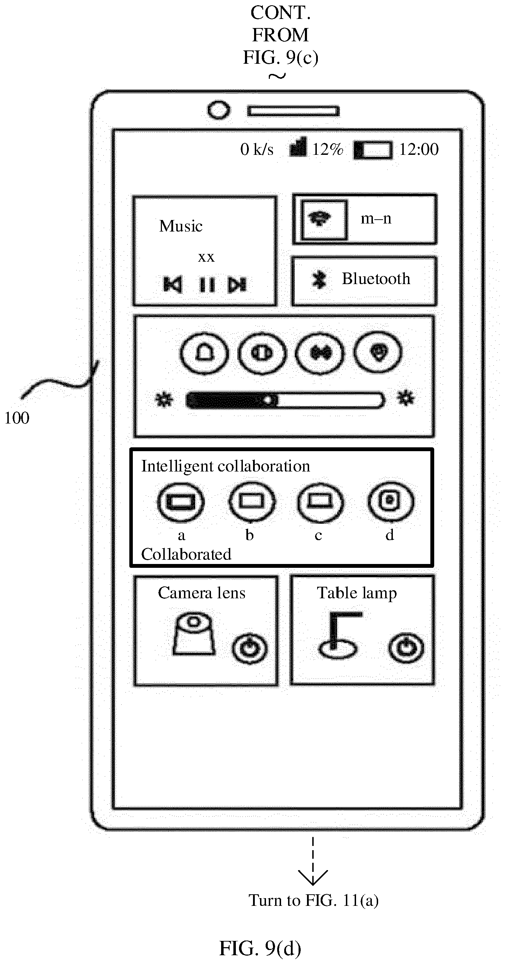

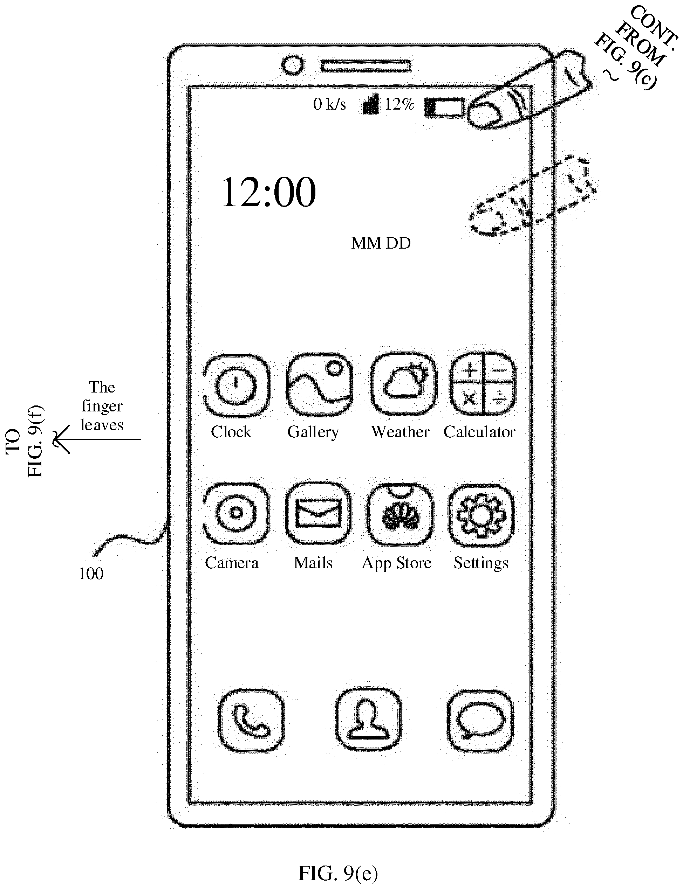

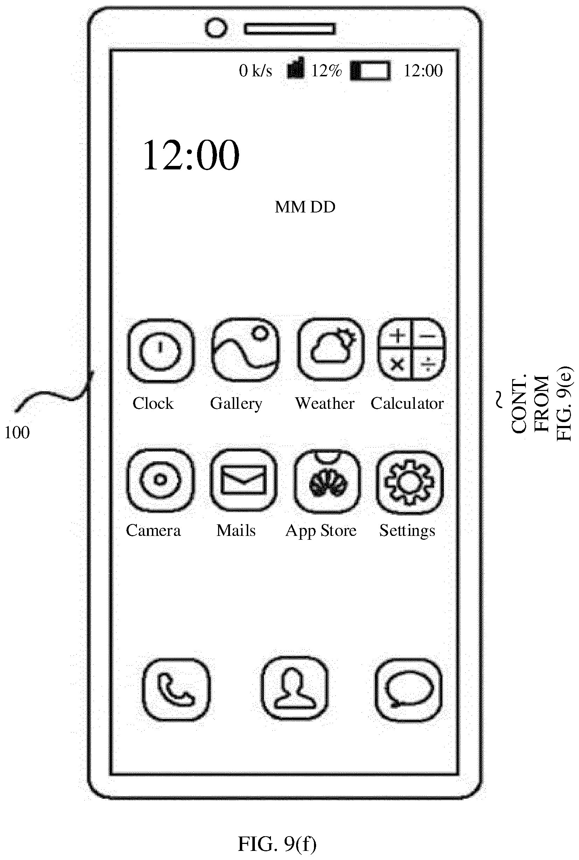

For example, when the notification center is not brought up on the mobile phone 100, and the control center is to be brought up currently, the screen of the mobile phone 100 may be in the screen-on state. For example, the display interface of the home screen is displayed on the screen of the mobile phone 100. As shown in FIG. 9(a), the finger of the user may touch a top right side of the screen of the mobile phone 100. Then, when the finger of the user slides downward, and does not reach the trigger threshold point, the display interface of the home screen may be gradually blurred along with the sliding of the finger of the user, as shown in FIG. 9(b). When the finger of the user slides to the trigger threshold point, the control center may be displayed, as shown in FIG. 9(c). After the control center is displayed on the screen of the mobile phone 100, if the finger of the user leaves the screen of the mobile phone 100, an interface shown in FIG. 9(d) may be displayed on the mobile phone 100. After the control center is displayed on the screen of the mobile phone 100, if the finger of the user slides in a reverse direction instead of leaving the screen of the mobile phone 100, the mobile phone 100 may return to an interface displayed before the control center is displayed, as shown in FIG. 9(e). Still refer to FIG. 9(e). After the finger of the user slides upward, the finger of the user may leave the screen of the mobile phone 100. In this case, an interface shown in FIG. 9(f) may be displayed, that is, an interface displayed after the home screen of the mobile phone 100 is returned.

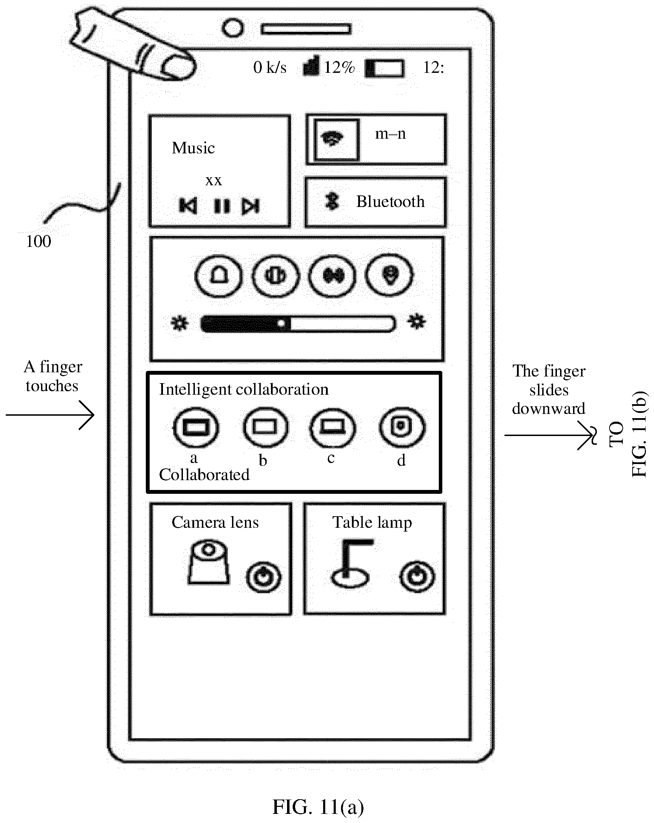

Optionally, after the interface shown in FIG. 9(d) is displayed on the mobile phone 100, refer to FIG. 11(a), to switch the control center to the notification center.

### (3) Switching between the notification center and the control center

### (a) The notification center is switched to the control center (the notification center has been brought up in this case).

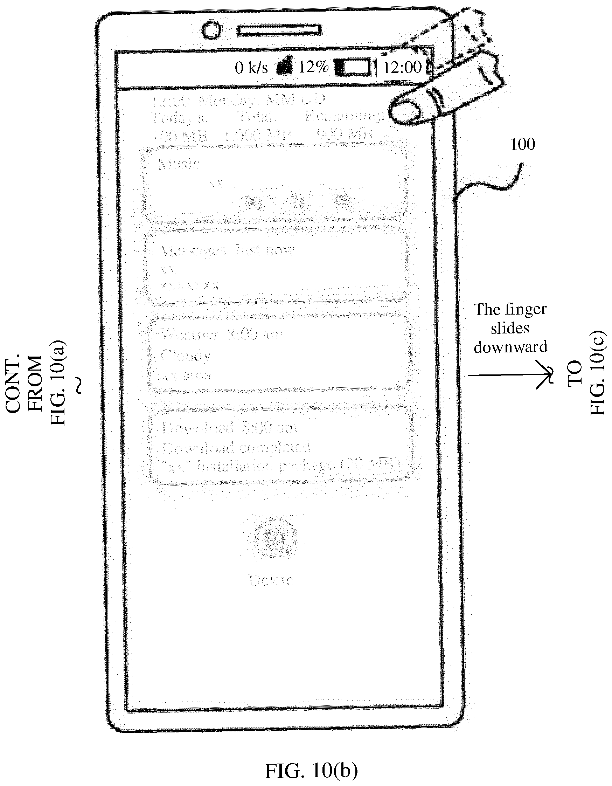

For example, after the notification center is brought up, as shown in FIG. 10(a), the finger of the user may touch the top right side of the screen of the mobile phone 100. Then, when the finger of the user slides downward, and does not reach the trigger threshold point, transparency of the notification center may be gradually increased along with the sliding of the finger of the user, as shown in FIG. 10(b). In this process, as the finger of the user is closer to the point at which a finger of a user touches a screen, the transparency is lower. As the finger of the user is closer to the trigger threshold point, the transparency is higher. That is, when the finger of the user slides, the notification center is gradually transparent from clear, until completely invisible. When the notification center is completely invisible, the finger of the user may slide to the trigger threshold point. In addition, the notification center may also be blurred in a process in which the finger of the user slides. It may be understood that, in the process in which the finger of the user slides, a transition processing action, for example, adjustment on the transparency or the foregoing blurring processing is optional. In some embodiments, in the process in which the finger of the user slides, the user may directly display pull-down content without performing any transition processing, to block a background behind the content or the notification center/the control center. In some embodiments, the blurring processing may be understood as adjustment on definition of the interface, to enable the interface to be blurred. The adjustment on the transparency may be understood as adjustment on transparency of the interface, to enable the interface to be transparent.

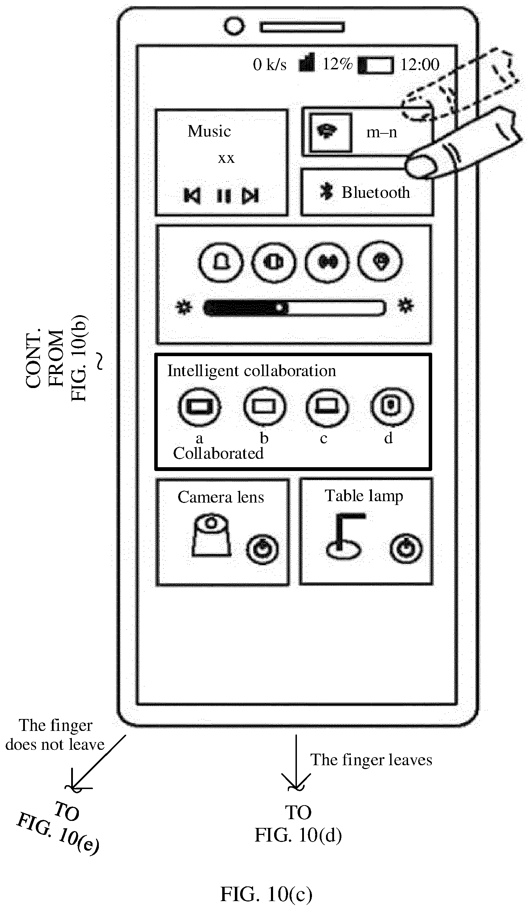

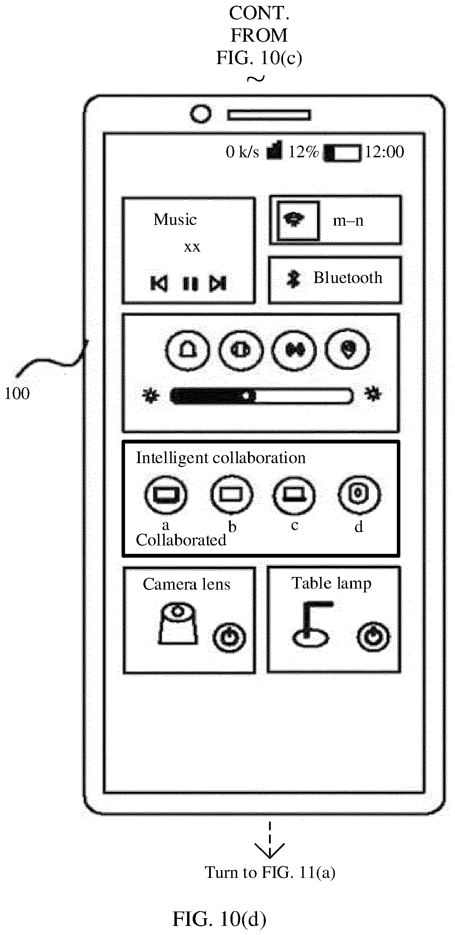

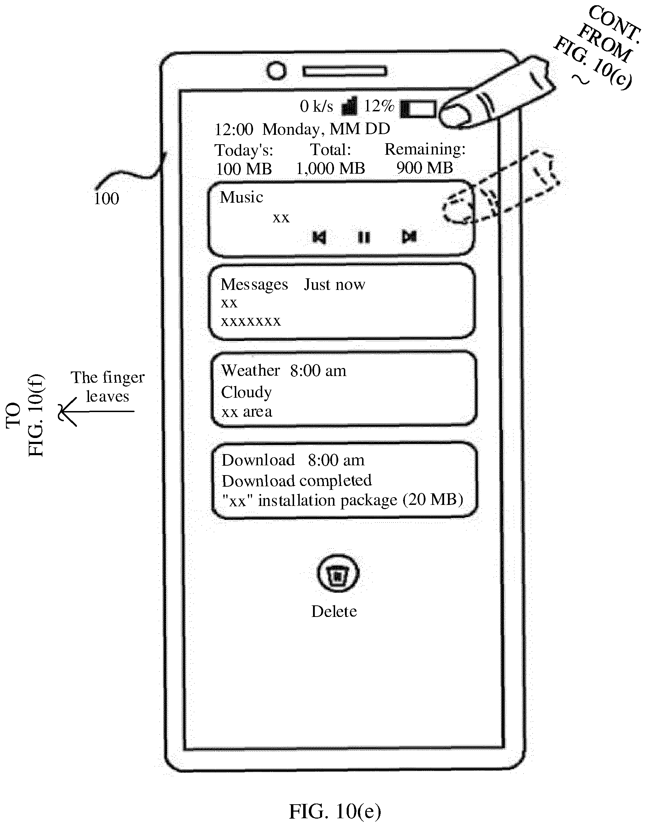

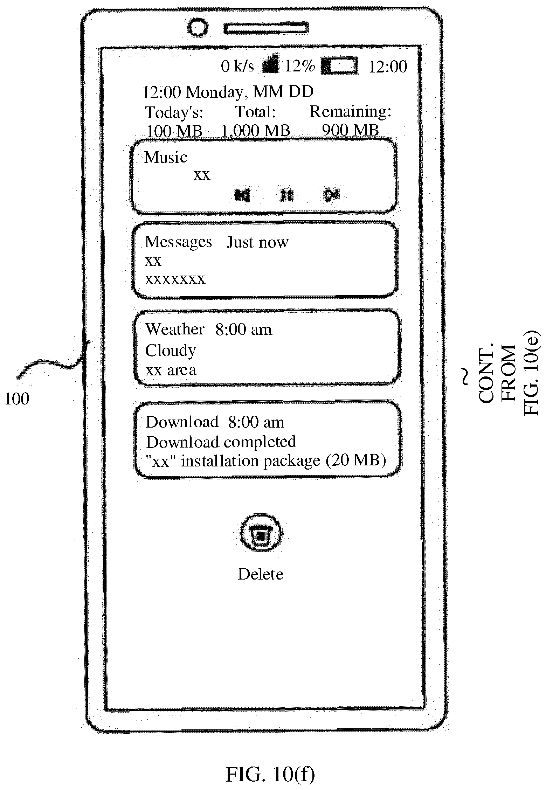

When the finger of the user slides to the trigger threshold point, the control center may be displayed, as shown in FIG. 10(c). After the control center is displayed on the screen of the mobile phone 100, if the finger of the user leaves the screen of the mobile phone 100, an interface shown in FIG. 10(d) may be displayed on the mobile phone 100. After the control center is displayed on the screen of the mobile phone 100, if the finger of the user slides in a reverse direction instead of leaving the screen of the mobile phone 100, the mobile phone 100 may return to an interface displayed before the control center is displayed, as shown in FIG. 10(e). Still refer to FIG. 10(e). After the finger of the user slides upward, the finger of the user may leave the screen of the mobile phone 100. In this case, an interface shown in FIG. 10(f) may be displayed, that is, an interface displayed after the notification center on the mobile phone 100 is returned.

Optionally, after the interface shown in FIG. 10(d) is displayed on the mobile phone 100, refer to FIG. 11(a), to switch the control center to the notification center.

### (b) The control center is switched to the notification center (the control center is brought up in this case).

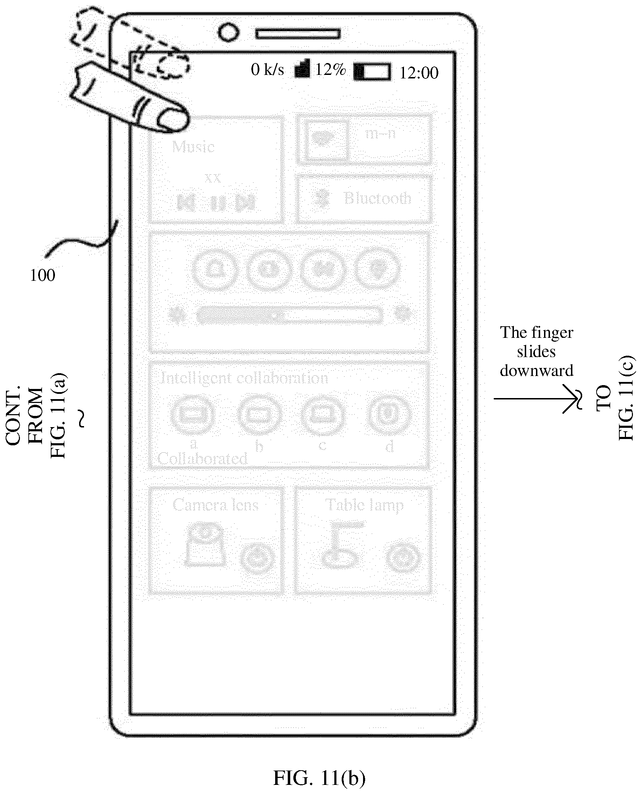

For example, after the control center is brought up, as shown in FIG. 11(a), the finger of the user may touch the top left side of the screen of the mobile phone 110. Then, when the finger of the user slides downward, and does not reach the trigger threshold point, transparency of the control center may be gradually increased along with sliding of the finger of the user, as shown in FIG. 11(b). In addition, the control center may also be blurred in a process in which the finger of the user slides.

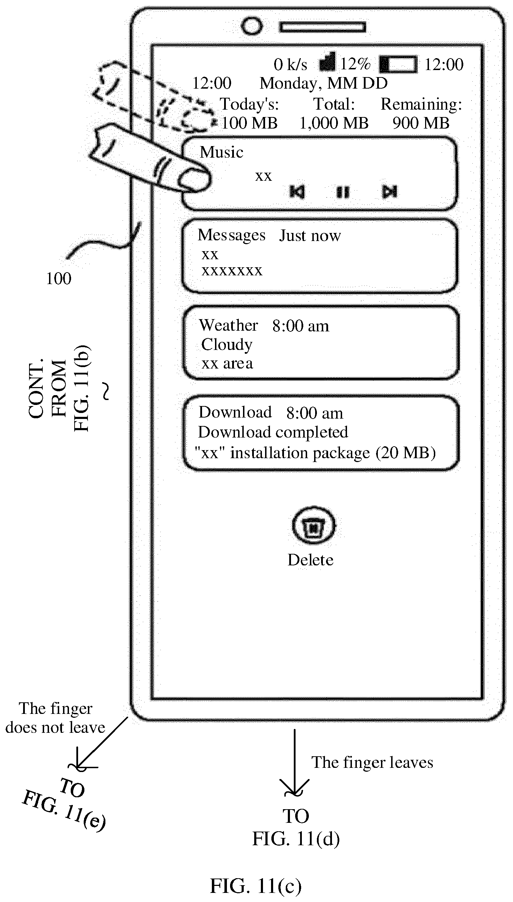

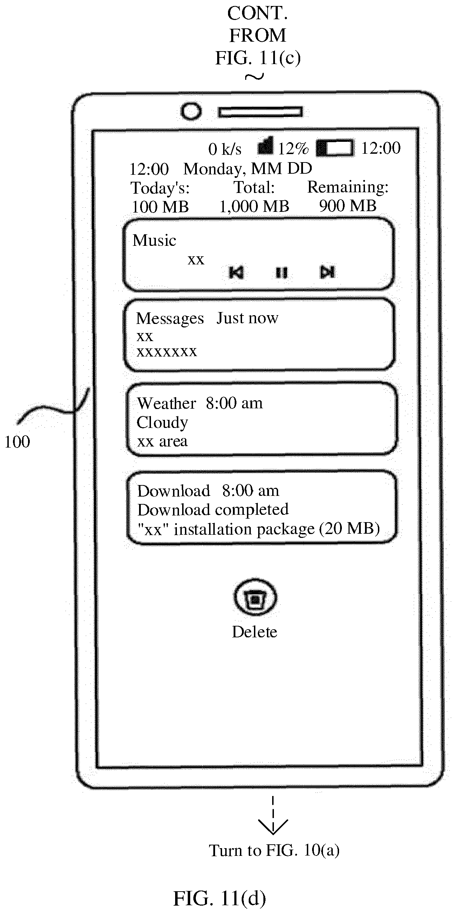

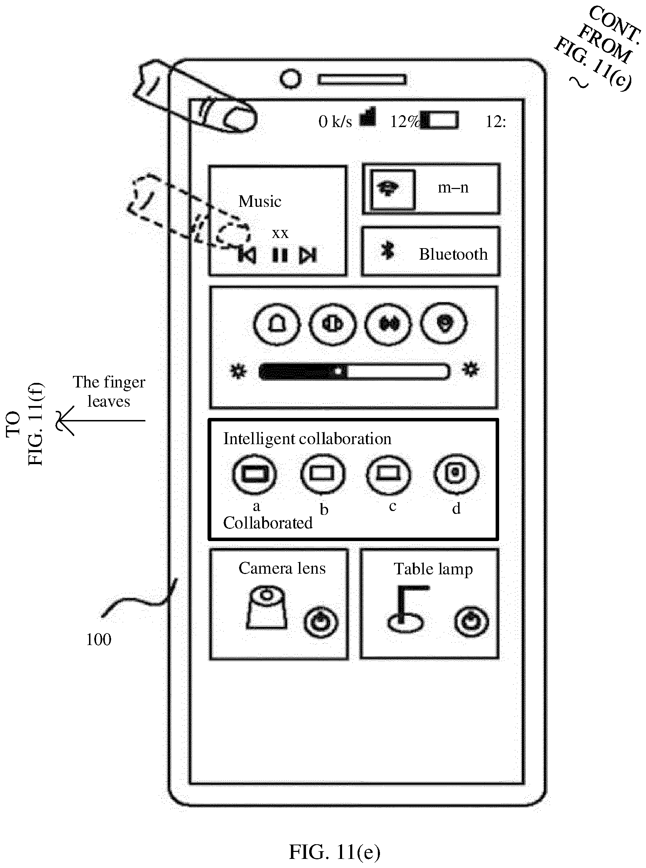

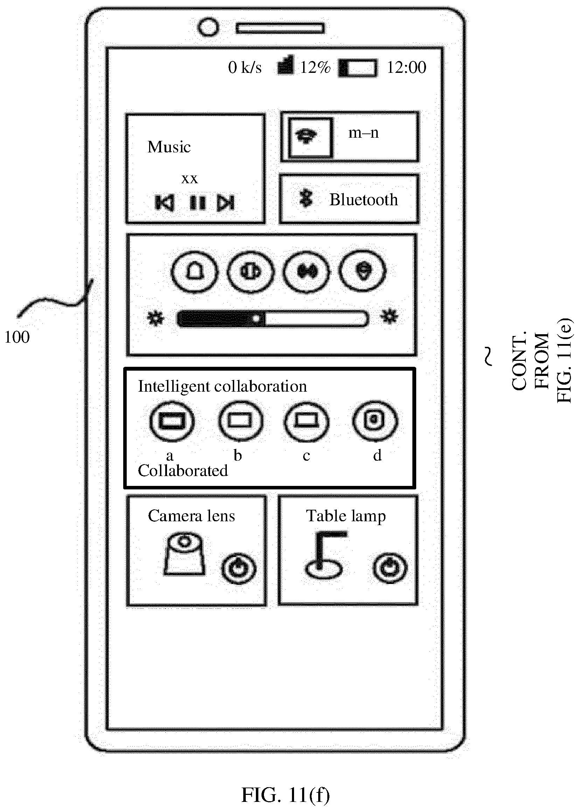

When the finger of the user slides to the trigger threshold point, the notification center may be displayed, as shown in FIG. 11(c). After the notification center is displayed on the screen of the mobile phone 110, if the finger of the user leaves the screen of the mobile phone 110, an interface shown in FIG. 11(d) may be displayed on the mobile phone 110. After the notification center is displayed on the screen of the mobile phone 110, if the finger of the user slides in a reverse direction instead of leaving the screen of the mobile phone 110, the mobile phone 110 may return to an interface displayed before the notification center is displayed, as shown in FIG. 11(e). Still refer to FIG. 11(e). After the finger of the user slides upward, the finger of the user may leave the screen of the mobile phone 110. In this case, an interface shown in FIG. 11(f) may be displayed, that is, an interface displayed after the control center on the mobile phone 110 is returned.

Optionally, after the interface shown in FIG. 11(d) is displayed on the mobile phone 100, refer to FIG. 10(a), to switch the notification center to the control center.

### (4) Switching between the notification center and the control center when the mobile phone 100 is in the screen-on state

When the mobile phone 100 is in the screen-on state, the user may first bring up the notification center, bring up the control center, and then directly return from the interface of the control center to an interface displayed before the notification center is brought up, that is, an interface displayed when the mobile phone 100 is in the screen-on state. In addition, the user may first bring up the control center, bring up the notification center, and then directly return from the interface of the notification center to an interface displayed before the control center is brought up, that is, the interface displayed when the mobile phone 100 is in the screen-on state. The following uses an example in which the display interface of the home screen is displayed on the screen of the mobile phone 100 for descriptions.

### (a) Home screen → notification center → control center → home screen

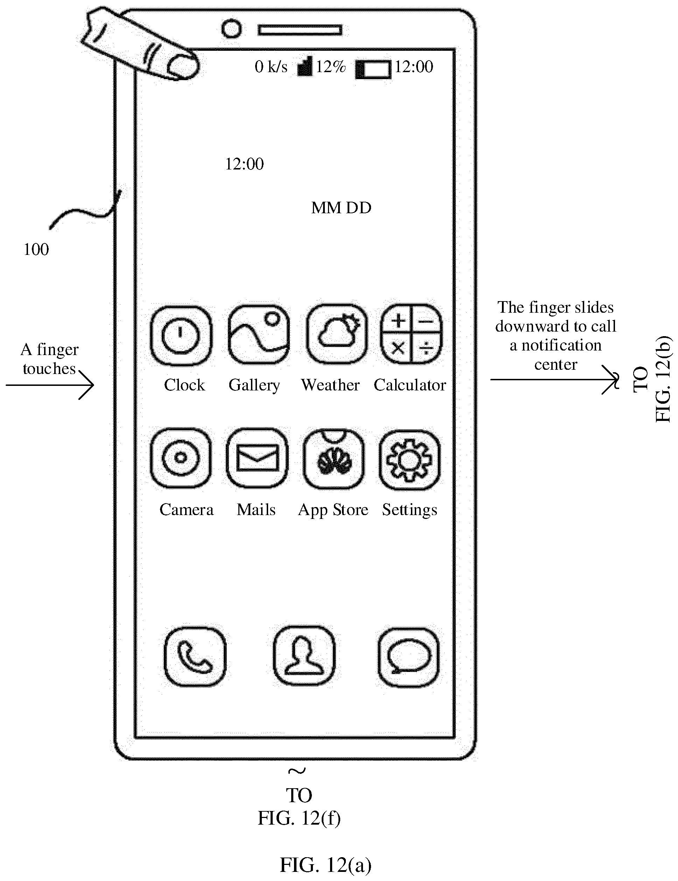

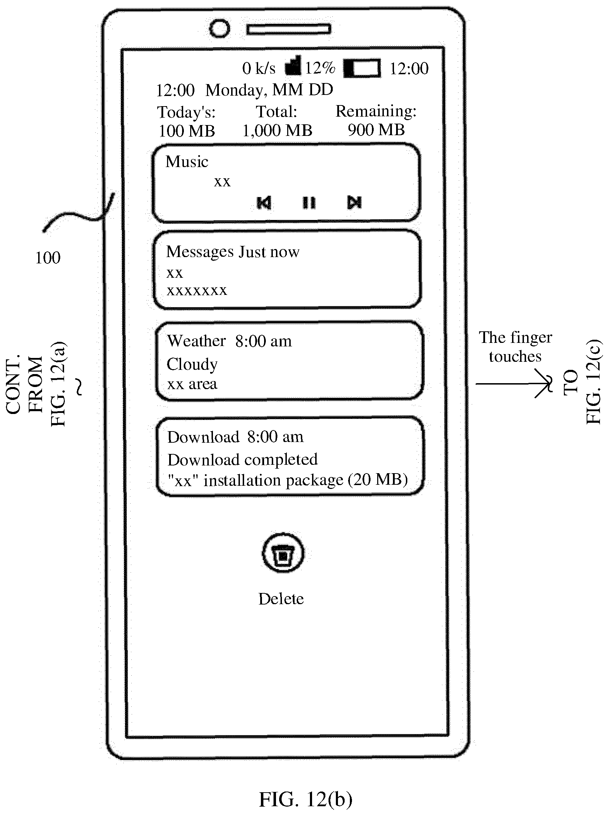

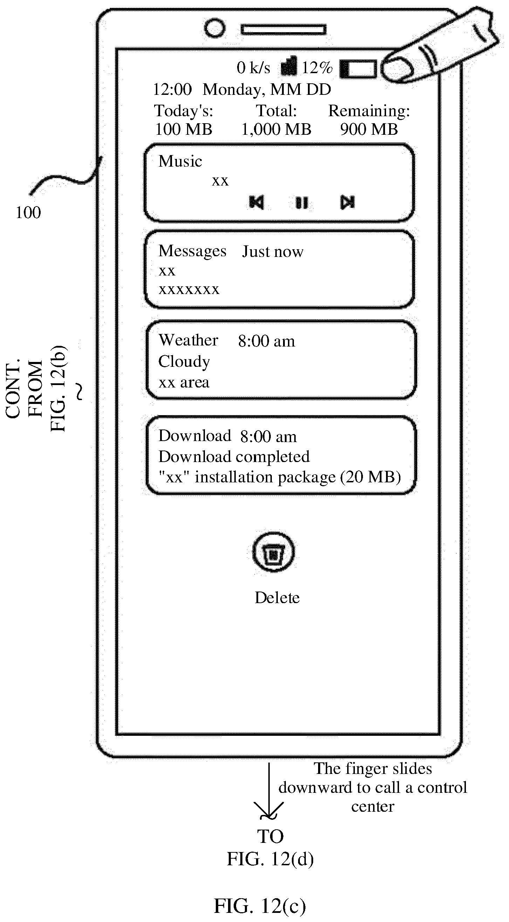

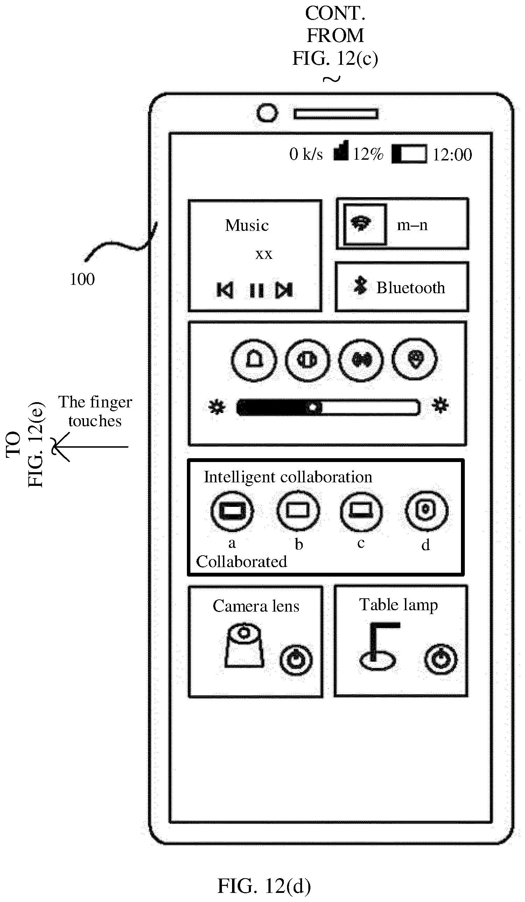

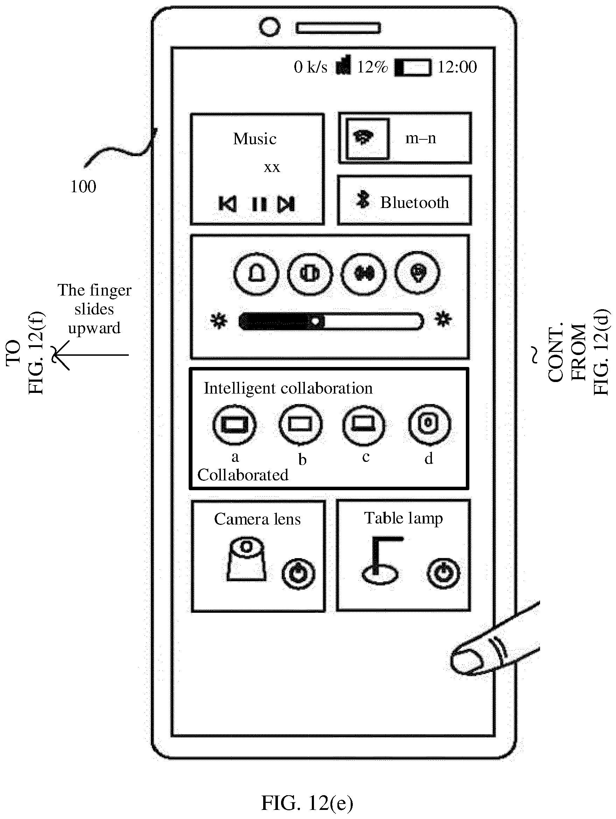

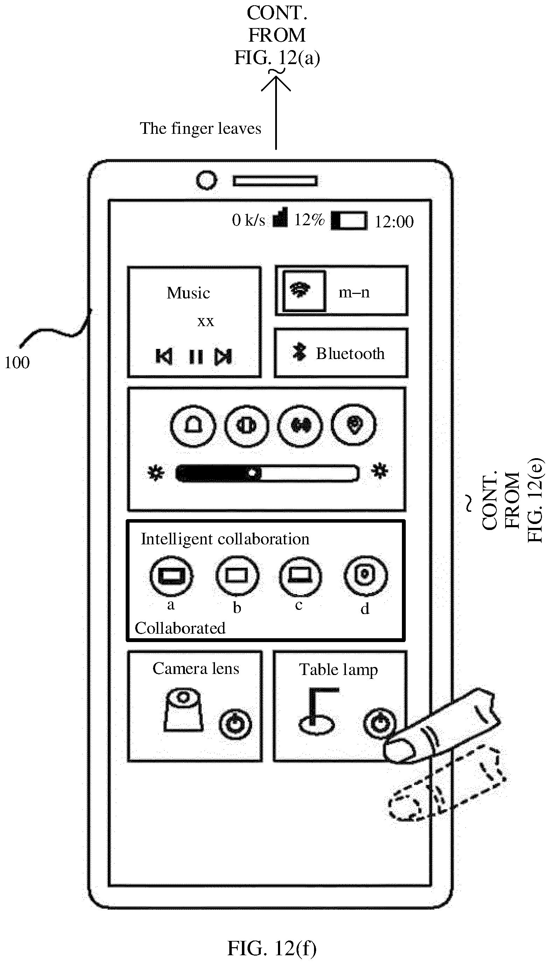

For example, as shown in FIG. 12(a), when the display interface of the home screen is displayed on the screen of the mobile phone 100, the finger of the user may touch the top left side of the screen of the mobile phone 100, and may slide downward to bring up the notification center, as shown in FIG. 12(b). As shown in FIG. 12(c), after the notification center is brought up, the finger of the user may touch the top right side of the screen of the mobile phone 100, and may slide downward to bring up the control center, as shown in FIG. 12(d). As shown in FIG. 12(e) and FIG. 12(f), after the control center is brought up, the finger of the user may touch a lower area of the screen of the mobile phone 100, and may slide upward. When the finger of the user slides upward, the finger of the user may leave the screen of the mobile phone 100. In this case, the screen of the mobile phone 100 may return to display an interface of the home screen. That is, an interface shown in FIG. 12(a) is displayed.

### (b) Home screen → control center → notification center → home screen

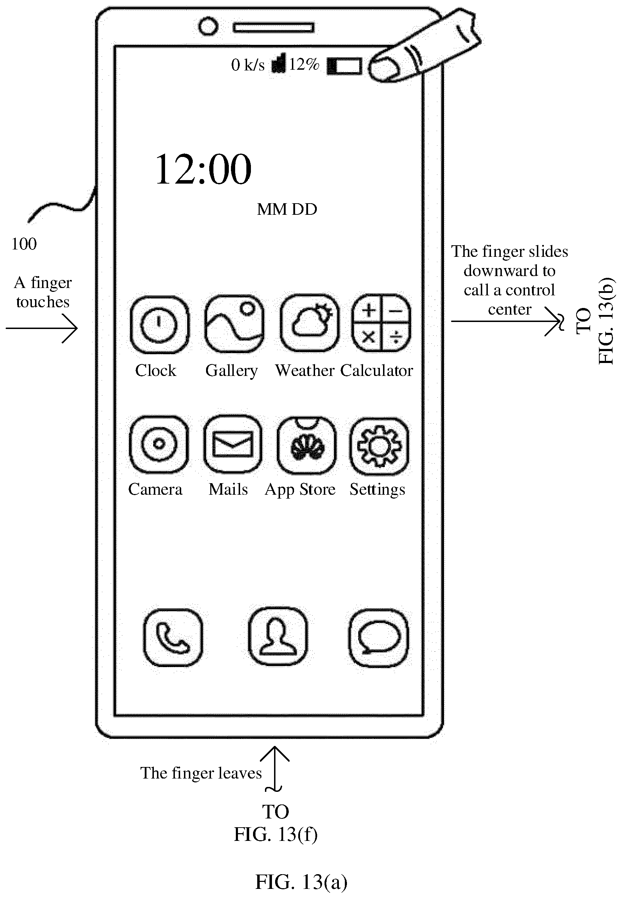

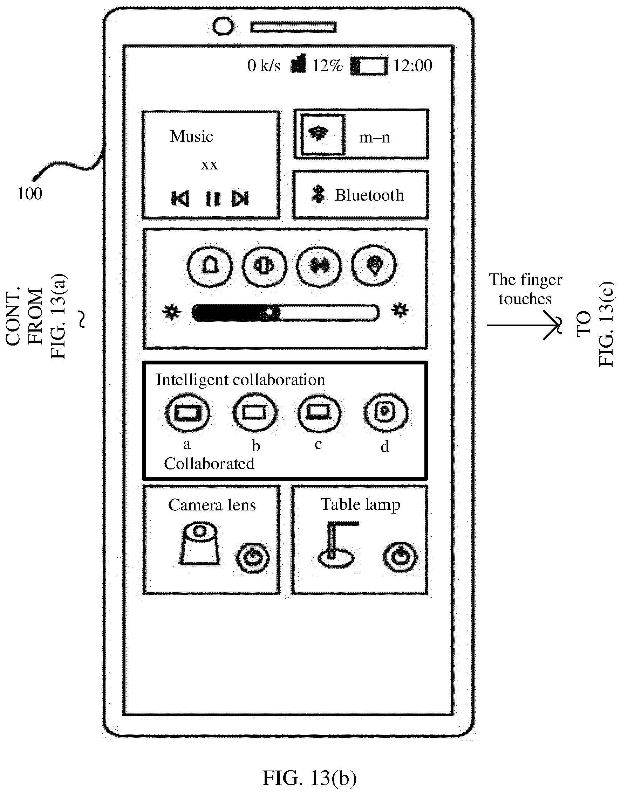

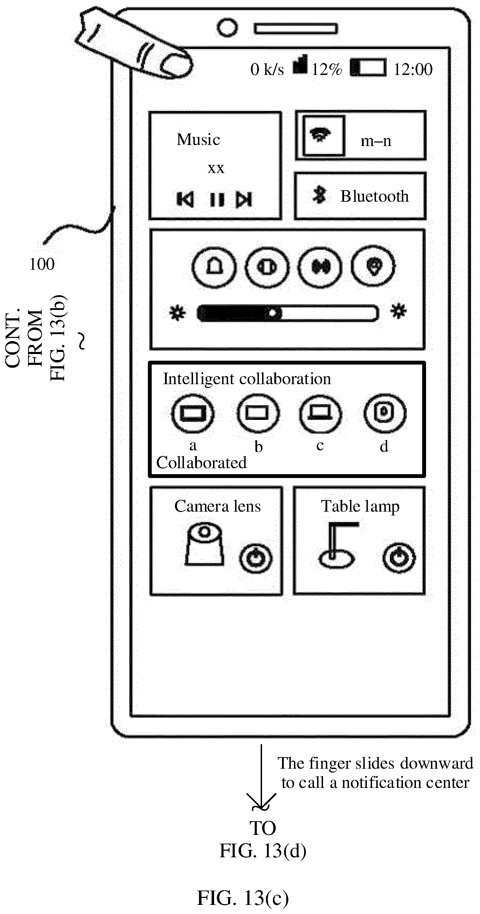

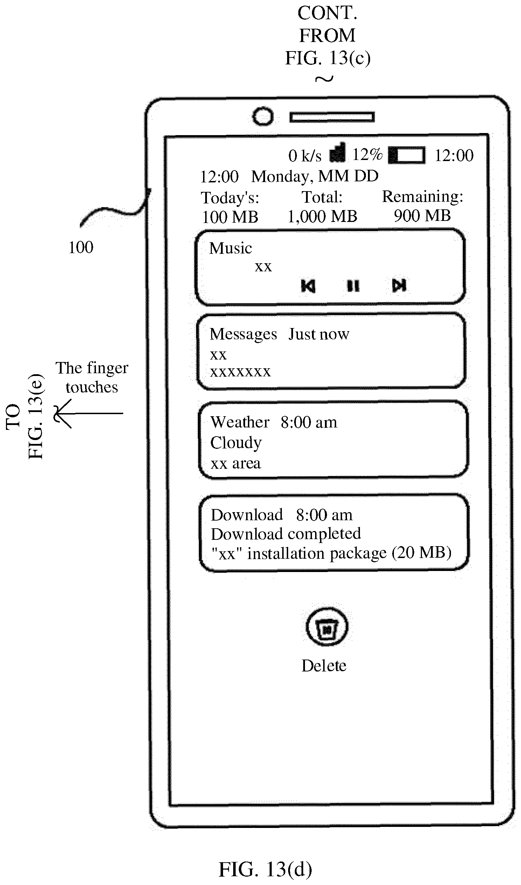

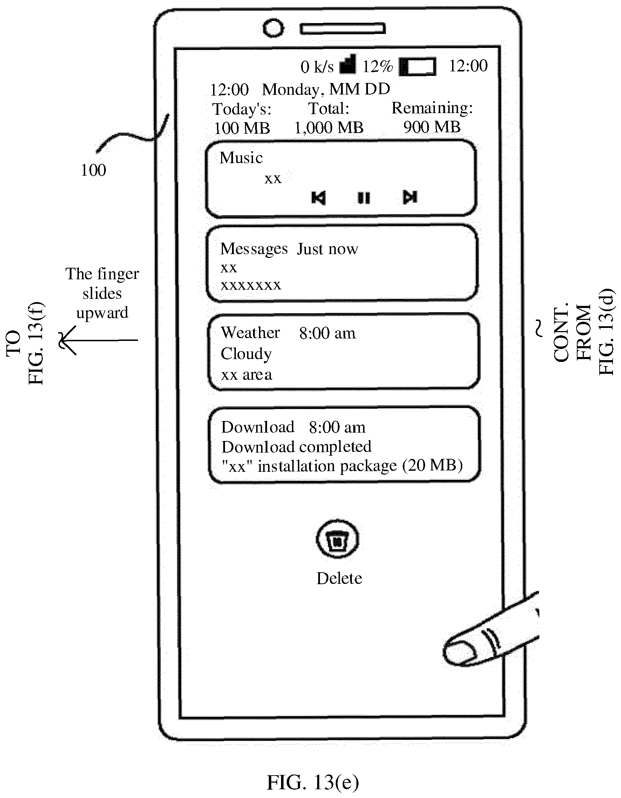

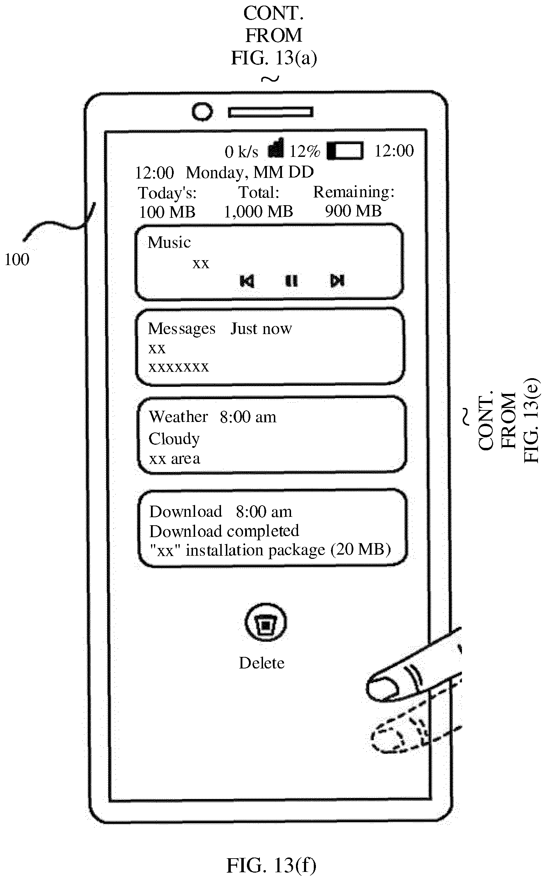

For example, as shown in FIG. 13(a), when the display interface of the home screen is displayed on the screen of the mobile phone 100, the finger of the user may touch the top right side of the screen of the mobile phone 100, and may slide downward to bring up the control center, as shown in FIG. 13(b). As shown in FIG. 13(c), after the control center is brought up, the finger of the user may touch the top left side of the screen of the mobile phone 100, and may slide downward to bring up the control center, as shown in FIG. 13(d). As shown in FIG. 13(e) and FIG. 13(f), after the control center is brought up, the finger of the user may touch a lower area of the screen of the mobile phone 100, and may slide upward. When the finger of the user slides upward, the finger of the user may leave the screen of the mobile phone 100. In this case, the screen of the mobile phone 100 may return to display an interface of the home screen. That is, an interface shown in FIG. 13(a) is displayed.

It may be understood that, in FIG. 12 (a) to FIG. 12(b) and/or FIG. 13(a) to FIG. 13(b), pull-down may be repeatedly and alternately performed to bring up the notification center and the control center. However, no matter which one is currently displayed on the mobile phone 100, after the mobile phone 100 receives an instruction for closing a currently displayed interface (for example, the finger of the user slides upward on the screen), the mobile phone 100 directly returns to the home screen, that is, returns to an interface displayed before a pull-down operation.

It may be understood that the content displayed in the notification center and/or the control center shown in FIG. 8(a) to FIG. 8(f) and FIG. 13(a) to FIG. 13(f) are merely examples for description. In some other embodiments of this application, the notification center and/or the control center may include more or less content than content shown in the figures, for example, the notification center and/or the control center may not include content related to music.

It may be understood that, in this embodiment of this application, the notification center and the control center may be displayed in different windows, or may be displayed in a same window. When the notification center and the control center are displayed in the different windows, closing the notification center may be understood as closing a window to which the notification center belongs, closing the control center may be understood as closing a window to which the control center belongs, opening the notification center may be understood as opening the window to which the notification center belongs, and opening the control center may be understood as opening the window to which the control center belongs.

When the notification center and the control center are displayed in the same window, the closing the notification center and the opening the control center may be understood as replacing content of the notification center with content of the control center, and the closing the control center and the opening the notification center may be understood as replacing the content of the control center with the content of the notification center. If the control center is not opened before the notification center is brought up, the opening the notification center may be understood as displaying the content of the notification center in the window. If the notification center is not opened before the control center is brought up, opening the content of the control center may be understood as displaying the content of the control center in the window. For example, both the notification center and the control center may be displayed in a status bar window.

The following describes a system architecture that can be implemented in a terminal control method by using an example in which both the notification center and the control center are displayed in the status bar window of the mobile phone 100.

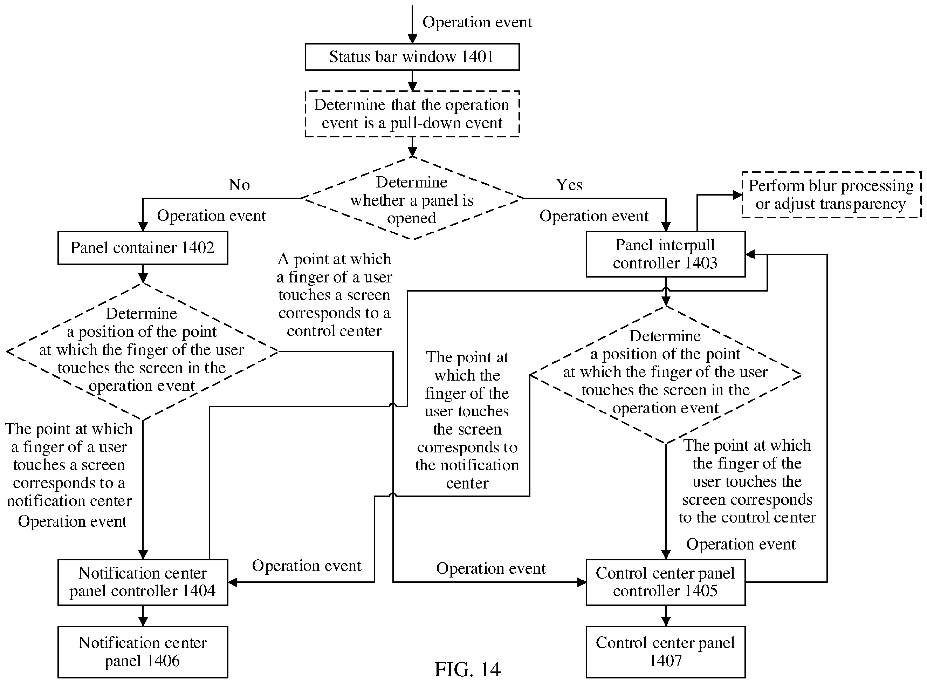

For example, FIG. 14 is a schematic diagram of a system architecture and a processing process of a mobile phone 100. As shown in FIG. 14, the system architecture of the mobile phone 100 may include a status bar window 1401, a panel container 1402, a panel interpull controller 1403, a notification center panel controller 1404, a control center panel controller 1405, a notification center panel 1406, and a control center panel 1407.

In a process in which a user calls a notification center or a control center, the status bar window 1401 may receive an operation event that is of the user and that is detected by a touchscreen on the mobile phone 100. The operation event may include coordinates of a position of the finger of the user. After receiving the operation event, the status bar window 1401 may determine, based on the coordinates of a position of the finger of the user at different moments in the operation event, whether the operation event of the user is a pull-down sliding event. In addition, after determining that the operation event of the user is the pull-down sliding event, the status bar window 1401 may determine whether a panel (for example, a notification panel or a control panel) is currently in an open state. If determining that no panel is currently in the open state, the status bar window 1401 sends the operation event received by the status bar window 1401 to the panel container 1402, and the panel container 1402 processes the operation event. If determining that a panel is currently in the open state, the status bar window 1401 sends the operation event received by the status bar window 1401 to the panel interpull controller 1403, and the panel interpull controller 1403 processes the operation event.

The panel container 1402 may determine, based on the coordinates of a position of the finger of the user in the operation event, a point at which a finger of a user touches a screen, and then may determine, based on the point at which a finger of a user touches a screen, whether a current operation purpose of the user is to open the notification center or open the control center. When the panel container 1402 determines that the current operation purpose of the user is to open the notification center, the panel container 1402 may send the operation event to the notification center panel controller 1404. When the panel container 1402 determines that the current operation purpose of the user is to open the control center, the panel container 1402 may send the operation event to the control center panel controller 1405.

When determining, in the status bar window 1401, that a panel is currently in an unfolded state, the panel interpull controller 1403 may determine, based on the coordinates of a position of the finger of the user in the operation event, whether a current operation purpose of the user is to close the notification center and open the control center, or close the control center and open the notification center. When the panel interpull controller 1403 determines that the current operation purpose of the user is to close the control center and open the notification center, the panel interpull controller 1403 may send the operation event to the notification center panel controller 1404. When the panel interpull controller 1403 determines that the current operation purpose of the user is to close the notification center and open the control center, the panel interpull controller 1403 may send the operation event to the control center panel controller 1405.

In addition, to enhance bringing up effect of a target panel, the panel interpull controller 1403 may perform, based on the operation event, blur processing on an interface displayed before the target panel is opened, or adjust transparency of content displayed before the target panel is opened. When the status bar window 1401 determines that no panel is opened, the panel interpull controller 1403 may obtain the operation event from a target controller corresponding to the current operation purpose of the user. In other words, in this case, the target controller may send the operation event to the panel interpull controller 1403.

The notification center controller 1404 may open the notification center panel 1406 based on the operation event. In addition, when the status bar window 1401 determines that no panel is opened, and the notification center controller 1404 receives the operation event, the notification center controller 1404 may send the operation event to the panel interpull controller 1403, so that the panel interpull controller 1403 may perform, based on the operation event, blur processing on an interface displayed before the notification center panel is opened, or adjust transparency of content displayed before the notification center panel is opened.

The control center controller 1405 may open the control center panel 1407 based on the operation event. In addition, when the status bar window 1401 determines that no panel is opened, and the control center controller 1404 receives the operation event, the control center controller 1404 may send the operation event to the panel interpull controller 1403, so that the panel interpull controller 1403 may perform, based on the operation event, blur processing on an interface displayed before the control center panel is opened, or adjust transparency of content displayed before the control center is opened.

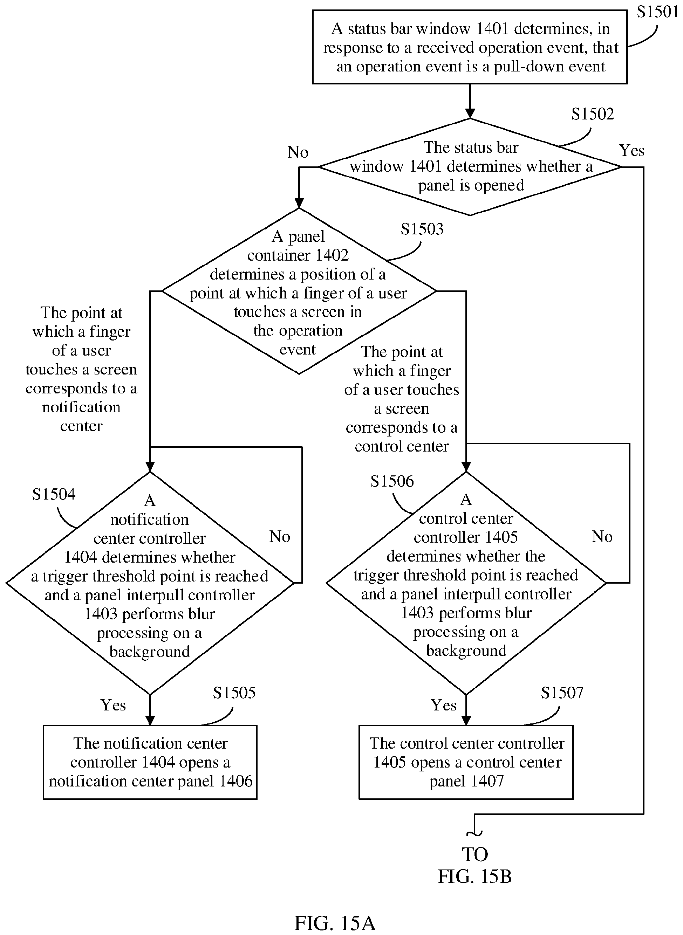

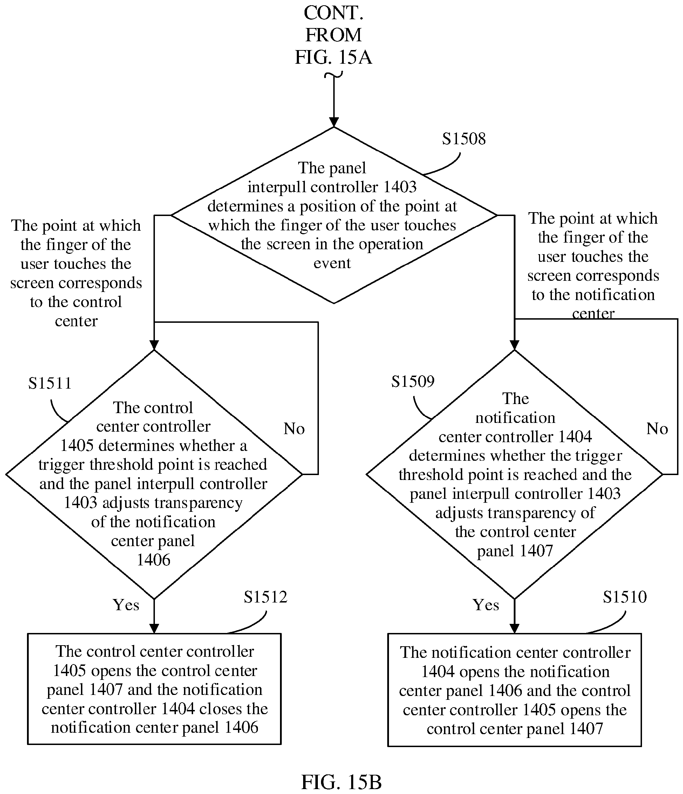

The following describes in detail a process in which the notification center and/or the control center is brought up with reference to FIG. 14 and FIG. 15A and FIG. 15B.

For example, FIG. 15A and FIG. 15B are a schematic flowchart of a process in which a notification center and/or a control center are/is brought up. As shown in FIG. 15A and FIG. 15B, the following steps are included.

Step 1501: The status bar window 1401 determines, in response to the received operation event, that the operation event is a pull-down event.

The status bar window 1401 may receive an operation event sent by a touchscreen of the mobile phone 100. The operation event may include the coordinates of a position of the finger of the user. After receiving the operation event, the status bar window 1401 may determine, based on the coordinates of a position of the finger of the user at different moments in the operation event, whether the operation event of the user is the pull-down event.

Step 1502: The status bar window 1401 determines whether a panel is opened.

The status bar window 1401 may determine, based on panel record information, whether a panel is currently in the open state. The panel record information may include an opening record and/or a closing record of the notification center panel and the control center panel. For example, when information recorded in the panel record information is that both the notification center and the control center are in a closed state, it may be determined that no panel is currently in the open state. Alternatively, when information recorded in the panel record information is that the notification center is in the closed state and the control center is in the open state, it may be determined that the panel is currently in the open state. If the status bar window 1401 determines that no panel is opened, step 1503 is performed. If the status bar window 1401 determines that a panel is opened, step 1508 is performed.

Step 1503: The panel container 1402 determines, in response to an operation event sent by the status bar window 1401, the point, in the operation event, at which a finger of a user touches a screen.

The panel container 1402 may determine, based on the coordinates of a position of the finger of the user in the operation event, an area in which the point at which a finger of a user touches a screen is located. Then, the panel container 1402 may determine, based on a preset correspondence between the area in which the point at which a finger of a user touches a screen is located and the notification center and the control center each, whether the current operation purpose of the user is to open the notification center or open the control center. For example, still refer to FIG. 7. The preset correspondence between the area in which the point at which a finger of a user touches a screen is located and the notification center and the control center each may be: When the point at which a finger of a user touches a screen is located in an area z1, the notification center is correspondingly brought up. When the point at which a finger of a user touches a screen is located in an area z2, the control center is correspondingly brought up. Therefore, when determining that the point at which a finger of a user touches a screen is located in the area z1, the panel container may determine that the current operation purpose of the user is to open the notification center. If the position of the point at which a finger of a user touches a screen corresponds to bringing up the notification center, step 1504 is performed. If the point at which a finger of a user touches a screen corresponds to bringing up the control center, step 1506 is performed.

Step 1504: The notification center controller 1404 determines, in response to an operation event sent by the panel container 1402, whether a trigger threshold point is reached, and the panel interpull controller 1403 performs, in response to the operation event sent by the notification center controller 1404, blur processing on a background. If it is determined that the trigger threshold point is reached, step 1505 is performed. If it is determined that the trigger threshold point is not reached, determining is continuously performed.

The notification center controller 1404 may determine, based on coordinates of a position of the finger of the user in a sliding process in the operation event, whether to slide to a preset trigger threshold point. For example, if coordinates of the point at which a finger of a user touches a screen are (2, 1) and coordinates of a current position at which the finger of the user is are (2, 5), a sliding distance is four. In this case, if the preset trigger threshold point is a point at a distance of four from the point at which a finger of a user touches a screen, the finger of the user slides to the trigger threshold point. If coordinates of the preset trigger threshold point are (k, 5), where k ≥ 0, the coordinates of a current position of the finger of the user are just at the trigger threshold point. In addition, if the notification center controller 1404 determines, based on the coordinates of a position of the finger of the user in a sliding process, that the finger of the user has left the screen when the finger of the user does not slide to the trigger threshold point. The notification center controller 1404 may also calculate, based on the operation event, a speed at a point at which a finger of a user leaves a screen. When the speed at the point at which a finger of a user leaves a screen is greater than a preset speed threshold, it may also be considered that the trigger threshold point is reached.

In a process of determining by the notification center controller 1404, the notification center controller 1404 may send, the panel interpull controller 1403, information about whether the trigger threshold point is reached, and may send the operation event to the panel interpull controller 1403. After the panel interpull controller 1403 receives the information sent by the notification center controller 1404, if the information indicates that the trigger threshold point is not reached, the panel interpull controller 1403 may perform blur processing (for example, reduction of definition of a current display interface) on the background (for example, an interface displayed before the notification center is brought up) based on the operation event, to enhance bringing up effect of the notification center panel. For example, the panel interpull controller 1403 may adjust a degree of blurring of the background based on a distance between coordinates of a current position of the finger of the user and the trigger threshold point in the operation event. For example, when the distance between the coordinates of a current position the finger of the user and the trigger threshold point is relatively long, the degree of blurring is relatively small. When the distance between the coordinates of a current position of the finger of the user and the trigger threshold point is relatively short, the degree of blurring is relatively large.

Step 1505: The notification center controller 1404 opens the notification center panel 1406.

Step 1506: The control center controller 1405 determines, in response to the operation event sent by the panel container 1402, whether the trigger threshold point is reached, and the panel interpull controller 1403 performs, in response to an operation event sent by the control center controller 1405, blur processing on the background. If it is determined that the trigger threshold point is reached, step 1507 is performed. If it is determined that the trigger threshold point is not reached, determining is continuously performed.

The control center controller 1405 may determine, based on the coordinates of a position of the finger of the user in the sliding process, a sliding speed in the sliding process, the speed at the point at which a finger of a user leaves a screen, or the like in the operation event, whether to slide to the preset trigger threshold point. In addition, the control center controller 1405 may send, the panel interpull controller 1403, information about whether the trigger threshold point is reached, and may send the operation event to the panel interpull controller 1403. After the panel interpull controller 1403 receives the information sent by the control center controller 1405, if the information indicates that the trigger threshold point is not reached, the panel interpull controller 1403 may perform blur processing (for example, reduction of definition of a current display interface) on the background (for example, the interface displayed before the control center is brought up) based on the operation event, to enhance bringing up effect of the control center panel.

Step 1507: The control center controller 1405 opens the control center panel 1407.

Step 1508: The panel interpull controller 1403 determines, in response to the operation event sent by the status bar window 1401, the point, in the operation event, at which a finger of a user touches a screen.

If the point at which a finger of a user touches a screen corresponds to bringing up the notification center, step 1509 is performed. If the point at which a finger of a user touches a screen corresponds to bringing up the control center, step 1511 is performed.

Step 1509: The notification center controller 1404 determiners, in response to an operation event sent by the panel interpull controller 1403, whether the trigger threshold point is reached, and the panel interpull controller 1403 adjusts transparency of the control center panel 1407 based on the operation event. If it is determined that the trigger threshold point is reached, step 1510 is performed. If it is determined that the trigger threshold point is not reached, determining is continuously performed.

The notification center controller 1404 may determine, based on the coordinates of a position of the finger of the user in a sliding process, the sliding speed in the sliding process, the speed at the point at which a finger of a user leaves a screen, or the like in the operation event, whether to slide to the preset trigger threshold point. In addition, in a process of determining by the notification center controller 1404, the panel interpull controller 1403 may adjust the transparency of the control center panel 1407 based on the operation event, to enhance the bringing up effect of the notification center panel. For example, the panel interpull controller 1403 may adjust the transparency of the control center panel 1407 based on a distance between the coordinates of a current position of the finger of the user and the trigger threshold point in the operation event. For example, when the distance between the coordinates of a current position of the finger of the user and the trigger threshold point is relatively long, the transparency of the control center panel 1407 is relatively small. When the distance between the coordinates of a current position of the finger of the user and the trigger threshold point is relatively short, the transparency of the control center panel 1407 is relatively large.

In addition, when the notification center controller 1404 determines that the trigger threshold point is reached, the notification center controller 1404 may also feed back, to the panel interpull controller 1403, information indicating that the trigger threshold point is reached, so that the panel interpull controller 1403 indicates, when the notification center controller 1404 determines that the trigger threshold point is reached, the control center controller 1405 to close the control center panel 1407.

Step 1510: The notification center controller 1404 opens the notification center panel 1406.

Step 1511: The control center controller 1405 determines, in response to the operation event sent by the panel interpull controller 1403, whether the trigger threshold point is reached, and the panel interpull controller 1403 adjusts transparency of the notification center panel 1406 based on the operation event. If it is determined that the trigger threshold point is reached, step 1512 is performed. If it is determined that the trigger threshold point is not reached, determining is continuously performed.

The control center controller 1405 may determine, based on the coordinates of a position of the finger of the user in the sliding process, a sliding speed in the sliding process, the speed at the point at which a finger of a user leaves a screen, or the like in the operation event, whether to slide to the preset trigger threshold point. In addition, in a process of determining by the control center controller 1405, the panel interpull controller 1403 may adjust the transparency of the notification center panel 1406 based on the operation event, to enhance the bringing up effect of the control center panel.

In addition, when the control center controller 1405 determines that the trigger threshold point is reached, the control center controller 1405 may also feed back, to the panel interpull controller 1403, information indicating that the trigger threshold point is reached, so that the panel interpull controller 1403 indicates, when the control center controller 1405 determines that the trigger threshold point is reached, the notification center controller 1404 to close the notification center panel 1406.

Step 1512: The control center controller 1405 opens the control center panel 1407.

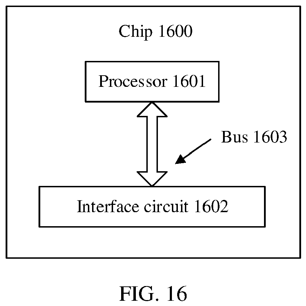

Based on the solutions described in the foregoing embodiments, an embodiment of this application further provides a chip. Refer to FIG. 16. FIG. 16 is a schematic diagram of a structure of a chip according to an embodiment of this application. As shown in FIG. 16, the chip 1600 includes one or more processors 1601 and an interface circuit 1602. Optionally, the chip 1600 may further include a bus 1603.

The processor 1601 may be an integrated circuit chip with a signal processing capability. In an implementation process, a control process in the foregoing solution may be completed by using an integrated logic circuit of hardware in the processor 1601, or by using instructions in a form of software. The interface circuit 1602 may be configured to send or receive data, instructions, or information. The processor 1601 may perform processing by using the data, the instructions, or other information received by the interface circuit 1602, and may send processed information by using the interface circuit 1602.

Optionally, the chip further includes a memory. The memory may include a read-only memory and a random access memory, and may provide operation instructions and data for the processor. A part of the memory may further include a non-volatile random access memory (non-volatile random access memory, NVRAM). Optionally, the memory stores an executable software module or a data structure, and the processor may perform a corresponding operation by invoking operation instructions (the operation instructions may be stored in an operating system) stored in the memory.

Optionally, the interface circuit 1602 may be configured to output an execution result of the processor 1601.

It should be noted that functions corresponding to each of the processor 1601 and the interface circuit 1602 may be implemented by using a hardware design, may be implemented by using a software design, or may be implemented by using a combination of software and hardware. This is not limited herein. For example, the chip may be used in the electronic device 100 shown in FIG. 2, to implement the method provided in this embodiment of this application.

It may be understood that, the processor in embodiments of this application may be a central processing unit (central processing unit, CPU), and alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor, or may be any conventional processor.

The method steps in embodiments of this application may be implemented by using hardware, or may be implemented by the processor by executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example of a storage medium is coupled to the processor, so that the processor can read information from the storage medium and can write information into the storage medium. Certainly, the storage medium may alternatively be a constituent part of the processor. The processor and the storage medium may be disposed in an ASIC.

All or some of the foregoing embodiments may be implemented by software, hardware, firmware, or any combination thereof. When software is used for implementation, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media that are integrated. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

It may be understood that various numbers in embodiments of this application are merely used for differentiation for ease of description, and are not used to limit the scope of embodiments of this application.

## Claims

1. A control method, applied to an electronic device having a touchscreen, wherein the method comprises:
displaying a first interface on the touchscreen;
in response to that the touchscreen receives a first operation, switching the first interface to a second interface, wherein the first operation is an operation of sliding on the touchscreen in a first direction when a start position at which a touch body touches the touchscreen is located in a first area of the touchscreen;
after the touch body completes the first operation and leaves the touchscreen, in response to that the touchscreen receives a second operation, switching the second interface to a third interface, wherein the second operation is an operation of sliding on the touchscreen in a second direction when a start position at which the touch body re-touches the touchscreen is located in a second area of the touchscreen; and
after the touch body completes the second operation and leaves the touchscreen, in response to that the touchscreen receives a third operation, switching the third interface to the first interface, wherein the third operation is an operation of sliding on the touchscreen in a third direction when a start position at which the touch body re-touches the touchscreen is located in a third area of the touchscreen, wherein
the second interface is a display interface of a notification center, and the third interface is a display interface of a control center; or the second interface is a display interface of a control center, and the third interface is a display interface of a notification center.

2. A control method, applied to an electronic device having a touchscreen, wherein the method comprises:
displaying a first interface on the touchscreen;
in response to that the touchscreen receives a first operation, switching the first interface to a second interface, wherein the first operation is an operation of sliding on the touchscreen in a first direction when a start position at which a touch body touches the touchscreen is located in a first area of the touchscreen;
after the touch body completes the first operation and leaves the touchscreen, in response to that the touchscreen receives a second operation, switching the second interface to a third interface, wherein the second operation is an operation of sliding on the touchscreen in a second direction when a start position at which the touch body re-touches the touchscreen is located in a second area of the touchscreen; and
after the touch body completes the second operation and leaves the touchscreen, in response to that the touchscreen receives the first operation again, switching the third interface to the second interface, wherein
the second interface is a display interface of a notification center, and the third interface is a display interface of a control center; or the second interface is a display interface of a control center, and the third interface is a display interface of a notification center.

3. The method according to claim 2, wherein after the switching the third interface to the second interface, the method further comprises:
after the touch body completes the first operation and leaves the touchscreen, in response to that the touchscreen receives a third operation, switching the second interface to the first interface, wherein the third operation is an operation of sliding on the touchscreen in a third direction when a start position at which the touch body re-touches the touchscreen is located in a third area of the touchscreen.

4. The method according to any one of claims 1 to 3, wherein the first interface comprises a display interface of a home screen on the electronic device, or the first interface comprises a display interface of an application on the electronic device.

5. The method according to any one of claims 1 to 4, wherein both the second interface and the third interface are displayed in a first window.

6. The method according to claim 5, wherein the first window is a status bar window.

7. The method according to any one of claims 1 to 6, wherein the first interface and the second interface are displayed in different windows.

8. The method according to any one of claims 1 to 7, wherein the first area is located on a first side at a top of the touchscreen, and the first direction is a direction from the top of the touchscreen to a bottom of the touchscreen;
the second area is located on a second side at the top of the touchscreen, and the second direction is the same as the first direction; and
the third area is an area other than the first area and the second area on the touchscreen, and the third direction is opposite to the first direction.

9. The method according to any one of claims 1 to 8, wherein the notification center is an entrance that is on the electronic device and that is used to manage pushing of an application on the electronic device or display resident status information; and
the control center is an entrance that is on the electronic device and that is used to control a status of the electronic device.

10. The method according to any one of claims 1 to 9, wherein before switching a first target interface to a second target interface, the method further comprises:
determining that an operation of the touch body on the touchscreen meets a trigger condition, wherein the trigger condition is a condition for triggering interface switching,
wherein the first target interface is the first interface, and the second target interface is the second interface; the first target interface is the second interface, and the second target interface is the third interface; the first target interface is the third interface, and the second target interface is the first interface; the first target interface is the third interface, and the second target interface is the second interface; or the first target interface is the second interface, and the second target interface is the first interface.

11. The method according to claim 10, wherein the condition for triggering interface switching specifically comprises:
a distance between a position at which the touch body touches the touchscreen at a current moment and the start position is greater than or equal to a preset distance threshold.

12. The method according to claim 10, wherein the condition for triggering interface switching specifically comprises:
a position at which the touch body touches the touchscreen at a current moment reaches a preset position on the touchscreen.

13. The method according to claim 10, wherein the condition for triggering interface switching specifically comprises:
a distance between a position at which the touch body leaves the touchscreen and the start position is less than a preset distance threshold, and a speed at which the touch body leaves the touchscreen is greater than or equal to a preset speed threshold.

14. The method according to any one of claims 10 to 13, wherein in a process in which the first target interface is switched to the second target interface, the method further comprises:
increasing transparency of the first target interface, or reducing definition of the first target interface.

15. The method according to any one of claims 1 to 14, wherein
the switching the first interface to a second interface comprises: covering the first interface with the second interface;
the switching the first interface to a second interface comprises: performing blur processing on the first interface, and covering, with the second interface, the first interface that is obtained by blur processing;
the switching the second interface to a third interface comprises: closing the second interface, and opening the third interface;
the switching the second interface to a third interface comprises: closing the second interface, and opening the third interface, wherein the third interface covers the first interface;
the switching the third interface to the first interface comprises: closing the third interface that covers the first interface, and presenting the first interface;
the switching the third interface to the second interface comprises: closing the third interface, and opening the second interface;
the switching the third interface to the second interface comprises: closing the third interface, and opening the second interface, wherein the second interface covers the first interface; or
the switching the second interface to the first interface comprises: closing the second interface that covers the first interface, and presenting the first interface.

16. A control method, applied to an electronic device having a touchscreen, wherein the method comprises:
displaying a first interface on the touchscreen, wherein the first interface comprises a display interface of a home screen on the electronic device, or the first interface comprises a display interface of an application on the electronic device;
in response to that the touchscreen receives a first operation, covering the first interface with a second interface, wherein the first operation is an operation of sliding toward a bottom of the touchscreen when a start position at which a touch body touches the touchscreen is located in a first area at a top of the touchscreen, and the second interface comprises a display interface of a notification center or a display interface of a control center;
after the touch body completes the first operation and leaves the touchscreen, in response to that the touchscreen receives a second operation, closing the second interface and opening a third interface, wherein the opened third interface covers the first interface, the second operation is an operation of sliding toward the bottom of the touchscreen when a start position at which the touch body re-touches the touchscreen is located in a second area at the top of the touchscreen, the third interface comprises a display interface of the notification center or a display interface of the control center, and the third interface is different from the second interface; and
after the touch body completes the second operation and leaves the touchscreen, in response to that the touchscreen receives a third operation, closing the third interface, and presenting the first interface, wherein the third operation is an operation of sliding toward the top of the touchscreen when a start position at which the touch body re-touches the touchscreen is located in a third area other than the top of the touchscreen.

17. The method according to claim 16, wherein before the covering the first interface with a second interface, the method further comprises:
reducing definition of the first interface.

18. The method according to claim 16 or 17, wherein before the closing the second interface, the method further comprises: increasing transparency of the second interface.

19. An electronic device, comprising:
a touchscreen;
one or more processors; and
a memory, wherein
one or more computer programs are stored in the memory, the one or more computer programs comprise instructions, and when the instructions are executed by the one or more processors, the electronic device is enabled to perform the method according to any one of claims 1 to 18.

20. A computer-readable storage medium, wherein the computer-readable storage medium stores a computer program, and when the computer program is run on an electronic device, the electronic device is enabled to perform the method according to any one of claims 1 to 18.

21. A computer program product, wherein when the computer program product is run on an electronic device, the electronic device is enabled to perform the method according to any one of claims 1 to 18.
